(19)

Europäisches
Patentamt
European
Patent Office
Office européen
des brevets

(11) **EP 2 641 395 B1**

(12) **EUROPEAN PATENT SPECIFICATION**

(45) Date of publication and mention
of the grant of the patent:
**09.10.2019 Bulletin 2019/41**

(21) Application number: **10859671.9**

(22) Date of filing: **15.11.2010**

(51) Int Cl.:
***H04N 7/18*** *(2006.01)*

(86) International application number:
**PCT/US2010/056691**

(87) International publication number:
**WO 2012/067603 (24.05.2012 Gazette 2012/21)**

(54) **SYSTEM AND METHOD FOR CAMERA CONTROL IN A SURVEILLANCE SYSTEM**

SYSTEM UND VERFAHREN ZUR KAMERASTEUERUNG IN EINEM ÜBERWACHUNGSSYSTEM

SYSTÈME ET PROCÉDÉ DE COMMANDE DE CAMÉRA DANS UN SYSTÈME DE SURVEILLANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.09.2013 Bulletin 2013/39**

(73) Proprietor: **Intergraph Corporation
Madison AL 35758 (US)**

(72) Inventors:
• **ESTES, Andrew, D.
Hunstville
AL 35806 (US)**
• **FREDERICK, Johnny, E.
Meridianville
AL 35759 (US)**

(74) Representative: **Kaminski Harmann
Patentanwälte AG
Landstrasse 124
9490 Vaduz (LI)**

(56) References cited:
**EP-A1- 1 975 752        KR-A- 20090 050 379
KR-A- 20100 005 378    US-A1- 2004 150 520
US-A1- 2008 031 493    US-A1- 2009 237 510
US-B2- 6 680 746**

• **OBUKHOV A, STRELNIKOV K, VATOLIN D: "Fully
Automatic PTZ Camera Calibration Method",
GRAPHICON 2008 PROCEEDINGS, 23 June 2008
(2008-06-23), pages 122-127, XP002725711,**

**Description**

**Technical Field**

The present invention relates to methods of camera control, and more particularly to methods of camera control in a surveillance system.

**Background Art**

Surveillance systems use cameras to survey areas of interest. The cameras produce video feeds that can be displayed to a user. In this manner, the user can remotely observe an area of interest. In some cases, the cameras in the surveillance system are fixed and the user cannot change their field of view. In other cases, however, the cameras and their field of views can be adjusted through user control. Typically, the control is performed using a manual control, such as a joystick. Thus, if the video feed includes a moving object, the user manually controls the camera to follow the moving object. This manual control of the camera is not very efficient, particularly if the user has a limited time period to capture and/or respond to the moving object. These problems are further compounded if the camera is not accurately and properly mounted (*e.g.,* to be level with the ground). In another example, image analysis is used to automatically control the camera to follow an object within the field of view. The shortcoming with this approach is that the image analysis cannot be performed unless the object is within the field of view of the camera. If the moving object is not within the field of view, the user must manually guide the camera to capture the moving object within its field of view.

A. Obukhov, K. Strelnikov and D. Vatolin in the paper "Fully Automatic PTZ Camera Calibration Method", Graphicon 2008 Proceedings, 23 June 2008, pages 122-127, disclose an automatic pan-tilt-zoom (PTZ) camera calibration, calibrating extrinsic parameters while assuming that the intrinsic parameters are known.

US 2009/0237510 A1 discloses a method for visualizing camera feeds such as traffic camera feeds by superimposing images based on the feeds onto a map derived from a 2D or 3D virtual map.

**Summary**

Illustrative embodiments of the present invention are directed to a method, a system, and a computer readable medium encoded with instructions for calibrating a surveillance system. The invention is defined by the appended claims. Any embodiment not falling in the scope of the claims should be construed as an example. Illustrative embodiments of the present invention include displaying a video feed from a camera that has an orientation characterized by pan, zoom, and tilt values. Exemplary embodiments further include displaying a map of an area that is characterized by geospatial coordinates. A user selects at least three pairs of points using an input device. A first point of the pair is selected in the map and a second point of the pair is selected from the video feed. The first point and the second point correspond to the same geographic location. The three points selected in the map are converted from geospatial coordinates into Cartesian coordinates defined by a first coordinate system. The three points selected in the video feed are converted from effective pan coordinates into Cartesian coordinates defined by a second coordinate system. A mathematical rotation between the first coordinate system and the second coordinate system is then determined based upon the Cartesian coordinates for the three pairs of points.

Various embodiments of the present invention also include allowing the user to select at least one point in the map using the input device. The geospatial coordinates for the selected point are converted into Cartesian coordinates defined by the first coordinate system and the mathematical rotation is applied to those Cartesian coordinates to determine Cartesian coordinates defined by the second coordinate system. The Cartesian coordinates defined by the second coordinate system are then further converted into pan and tilt coordinates for the selected point. Orientation instructions are then provided to the camera based upon the pan and tilt coordinates for the selected point.

In additional or alternative embodiments of the present invention, coordinates from a sensor for a target are received and, if the coordinates for the target are not Cartesian coordinates defined by the first coordinate system, then they are converted into Cartesian coordinates defined by the first coordinate system. The mathematical rotation is applied to the Cartesian coordinates defined by the first Cartesian coordinate system to determine Cartesian coordinates defined by the second Cartesian coordinate system. The Cartesian coordinates defined by the second Cartesian coordinate system are converted into pan and tilt coordinates and orientation instructions are provided to the camera based upon the pan and tilt coordinates.

In another illustrative embodiment of the present invention, the video feed has upper left, upper right, lower left, and lower right corners. Exemplary embodiments of the invention further include determining effective pan and tilt angles for at least the lower left and lower right corners of the video feed based upon the pan, zoom, and tilt coordinates for the camera orientation. The effective pan and tilt angles for at least the lower left and lower right corners of the video feed are converted into Cartesian coordinates defined by the second coordinate system. The mathematical rotation is applied to the Cartesian coordinates defined by the second coordinate system to determine Cartesian coordinates defined by the first coordinate system for at least the lower left and lower right corners of the video feed. A view cone is determined using the Cartesian coordinates defined by the first coordinate system for at least the lower left and lower right corners of the video feed and based upon the upper left and upper right corners of the video feed. The view cone is displayed on the map.

Illustrative embodiments of the present invention are directed to a method, a system, and a computer readable medium encoded with instructions for controlling a camera that has an orientation characterized by pan, zoom, and tilt coordinates. Exemplary embodiments of the invention include displaying a map of an area that is characterized by geospatial coordinates. A user selects at least one point in the map using the input device. The geospatial coordinates for the selected point are converted into Cartesian coordinates defined by a first coordinate system that characterizes the map. A mathematical rotation is applied to the Cartesian coordinates for the selected point to determine Cartesian coordinates defined by a second coordinate system that characterizes a video feed from the camera. The mathematical rotation provides a conversion between the first coordinate system and the second coordinate system. The Cartesian coordinates defined by the second coordinate system are converted into pan and tilt coordinates for the selected point and orientation instructions are provided to the camera based upon at least the pan and tilt coordinates for the selected point. The video feed from the camera is then displayed according to the pan and tilt coordinates.

Illustrative embodiments of the present invention are directed to a method, a system, and a computer readable medium encoded with instructions for prioritizing video feeds from a plurality of cameras that have locations characterized by coordinates. Exemplary embodiment of the invention include receiving coordinates for a point of interest and determining whether the point of interest is within the viewing range of any of the plurality of the cameras. If more than one camera is within viewing range of the point of interest, the distances between the cameras and the point of interest are determined. Various embodiments of the present invention further include determining which of the cameras is the least distant from the point of interest. Orientation instructions are provided to the least distant camera based upon the coordinates of the point of interest and a video feed is displayed from the least distant camera.

Illustrative embodiments of the present invention are directed to a method, a system, and a computer readable medium encoded with instructions for tracking at least one target using a sensor and a camera that has an orientation characterized by pan, zoom, and tilt coordinates. Exemplary embodiments of the invention include receiving coordinates from the sensor for the target. If the coordinates for the target are not Cartesian coordinates defined by a first coordinate system characterizing the map, then the coordinates are converted into Cartesian coordinates defined by the first coordinate system. A mathematical rotation is applied to the Cartesian coordinates defined by the first coordinate system in order to determine Cartesian coordinates defined by a second coordinate system that characterizes a video feed from the camera. The mathematical rotation provides a conversion between the first coordinate system and the second coordinate system. The Cartesian coordinates defined by the second Cartesian coordinate system are converted into pan and tilt coordinates and orientation instructions are provided to the camera based upon the pan and tilt coordinates. The video feed from the camera is then displayed according to the pan and tilt coordinates.

Illustrative embodiments of the present invention are directed to a method, a system, and a computer readable medium encoded with instructions for displaying a view cone for a camera that has an orientation characterized by pan, zoom, and tilt coordinates. Exemplary embodiments of the present invention include displaying a map of an area, determining the view cone based upon the pan, zoom, and tilt coordinates for the camera, and displaying the view cone on the map.

Illustrative embodiments of the present invention are directed to a method, a system, and a computer readable medium encoded with instructions for displaying a view cone for a camera that has an orientation characterized by pan, zoom, and tilt coordinates. Exemplary embodiments of the present invention include displaying a map of an area that is characterized by geospatial coordinates. Effective pan and tilt angles are determined for at least the lower left and lower right corners of the video feed based upon the pan, zoom, and tilt coordinates for the camera orientation. The effective pan and tilt angles for at least the lower left and lower right corners of the video feed are converted into Cartesian coordinates defined by a second coordinate system that characterizes the video feed. A mathematical rotation is applied to the Cartesian coordinates for at least the lower left and lower right corners of the video feed to determine Cartesian coordinates defined by a first coordinate system that characterizes the map. The mathematical rotation provides a conversion between the first coordinate system and the second coordinate system. A view cone is then determined based upon the Cartesian coordinates, defined by the first coordinate system, for at least the lower left and lower right corners and based upon the upper left and upper right corners of the video feed. The view cone is then displayed on the map.

When the tilt coordinate for the camera is below the horizon, determining the view cone based upon the upper left and upper right corners of the video feed further includes determining effective pan and tilt angles for the upper left and upper right corners of the video feed based upon the pan, zoom, and tilt coordinates for the camera orientation. The effective pan and tilt angles for the upper left and upper right corners of the video feed are converted into Cartesian coordinates defined by the second coordinate system. The mathematical rotation is applied to the Cartesian coordinates to determine Cartesian coordinates defined by the first coordinate system for the upper left and upper right corners of the video feed. The view cone is determined based upon the Cartesian coordinates, defined by the first coordinate system, for the upper left, upper right, lower left and lower right corners.

When the tilt coordinate for the camera is above the horizon, determining the view cone based upon the upper left and upper right corners of the video feed includes determining effective tilt angles for the upper left and upper right corners of the video feed based upon the pan, zoom, and tilt coordinates for the camera. Coordinates, defined by the first coordinate system, for the upper left and upper right corners of the video feed are determined based upon a resolvable distance of the camera. The view cone is determined based upon the Cartesian coordinates, defined by the first coordinate system, for the upper left, upper right, lower left and lower right corners.

In further exemplary embodiments, the view cone is a polygon and the Cartesian coordinates, defined by the first coordinate system, for the upper left, upper right, lower left and lower right corners are the vertices of the polygon.

Illustrative embodiments of the present invention are directed to a method, a calibrated system, and a computer readable medium encoded with instructions for controlling a camera. Exemplary embodiments of the present invention include displaying a map of an area and determining Cartesian coordinates for a point of interest. The Cartesian coordinates are defined by a first coordinate system characterizing the map. Exemplary embodiments further include applying a mathematical rotation to the Cartesian coordinates for the point of interest to determine Cartesian coordinates defined by a second coordinate system that characterizes a video feed from the camera. The mathematical rotation provides a conversion between the first coordinate system and the second coordinate system. The Cartesian coordinates defined by the second coordinate system are converted into at least pan and tilt coordinates for the point of interest and orientation instructions are provided to the camera based upon at least the pan and tilt coordinates for the point of interest. The video feed from the camera is displayed according to the orientation instructions.

In all or some of the above described embodiments, the geospatial coordinates are latitude, longitude, and altitude coordinates. The input device is one or more of a mouse, a cursor, a crosshair, a touch screen, and a keyboard. The sensor is one or more of a camera, a radar, and a motion detector.

Furthermore, in all or some of the above described embodiments, the map of an area is displayed and the map is characterized by geospatial coordinates. In some embodiments, the location of at least one camera is displayed on the map. In additional or alternative embodiments, the location of at least one sensor is displayed on the map. Also, in some embodiments, the location of at least one target is displayed on the map.

In all or some of the above described embodiments, the mathematical rotation is determined by displaying a map of an area that is characterized by geospatial coordinates. A user selects at least three pairs of points using an input device. The first point of the pair is selected in the map and a second point of the pair being selected from the video feed. The first point and the second point corresponding to the same geographic location. The three points selected in the map are converted from geospatial coordinates into Cartesian coordinates defined by the first coordinate system. The at least three points selected in the video feed are converted from pan, zoom, and tilt coordinates into Cartesian coordinates defined by the second coordinate system. The mathematical rotation between the first coordinate system and the second coordinate system is determined based upon the Cartesian coordinates for the at least three pairs of points. In some embodiments, the mathematical rotation is a matrix.

## Brief Description of the Drawings

The foregoing features of the invention will be more readily understood by reference to the following detailed description, taken with reference to the accompanying drawings, in which:

Fig. 1 shows a surveillance system in accordance with one embodiment of the present invention;
Fig. 2 shows a method for calibrating a surveillance system in accordance with one embodiment of the present invention;
Fig. 3A shows a video feed from a camera in accordance with one embodiment of the present invention;
Fig. 3B shows a map of a building floor plan in accordance with one embodiment of the present invention;
Fig. 4A shows a video feed from a camera in accordance with one embodiment of the present invention;
Fig. 4B shows a video feed from a camera in accordance with one embodiment of the present invention;
Fig. 5 shows a table of selected points in accordance with one embodiment of the present invention;
Fig. 6 shows a method for controlling at least one camera in accordance with one embodiment of the present invention;
Fig. 7 shows a map of an outdoor terrain in accordance with one embodiment of the present invention;
Fig. 8 shows a method for tracking a target in accordance with one embodiment of the present invention;
Fig. 9 shows a method for prioritizing video feeds from a plurality of cameras in accordance with one embodiment of the present invention;
Fig. 10 shows a map of an outdoor terrain with a plurality of cameras in accordance with one embodiment of the present invention;

Fig. 11 shows a viewing range of a camera in accordance with one embodiment of the present invention;

Fig. 12 shows a method for displaying a view cone for at least one camera in accordance with one embodiment of the present invention;

Fig. 13 shows a view cone and a camera icon in accordance with one embodiment of the present invention.

Fig. 14 shows a view cone and camera icon as applied to a map in accordance with one embodiment of the present invention;

Fig. 15 shows a video feed and a corresponding view cone in accordance with one embodiment of the present invention;

Fig. 16 shows a video image transposed into a polygonal view cone in accordance with one embodiment of the present invention;

Fig. 17 shows how an observable distance is calculated using a right triangle in accordance with one embodiment of the present invention; and

Fig. 18 shows a view cone in accordance with one embodiment of the present invention.

## Detailed Description of Specific Embodiments

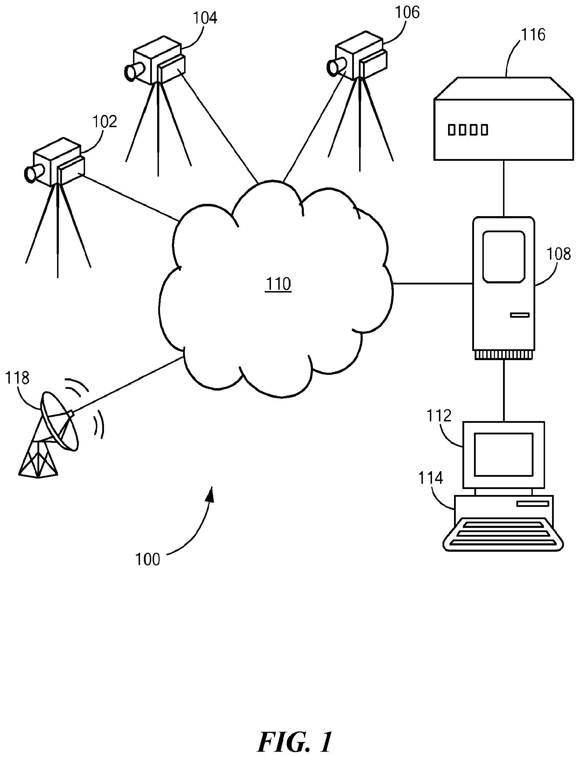

Illustrative embodiments of the present invention are directed to a surveillance system. Fig. 1 shows a surveillance system **100** in accordance with one embodiment of the present invention. Illustrative embodiments of the surveillance system include at least one camera **102.** In other embodiments, such as the one shown in Fig. 1, the system includes a plurality of cameras **102, 104, 106.** The cameras **102, 104, 106** are in electronic communication with a processor (*e.g.,* a camera server) via, for example, a communications network **110.** The processor **108** is also in communication with at least one display device such as a monitor **112.** The display device **112** allows a user to view video feeds from the cameras **102, 104, 106.** The system **100** also includes an input device **114** such as a computer mouse, a cursor, a crosshair, a keyboard, a menu, and/or a joy stick. In various embodiments, the display device **112** is also the input **114** device (*e.g.,* touch screen). The input device **114** is in electronic communication with the processor **108** and allows a user to control the cameras **102, 104, 106** and to select points in the video feeds from each of the cameras.

In illustrative embodiments, the surveillance system also includes a geographic information system **116.** The geographic information system **116** includes a database of maps of geographic areas (*e.g.,* building floor plans and/or outdoor terrains). Each map includes geospatial coordinates definable by a geographic coordinate system (*e.g.,* latitude, longitude, and altitude). In additional or alternative embodiments, the geospatial coordinates are definable a Cartesian Coordinate system.

In some embodiments, the processor **108** itself includes the geographic information system **116,** however, in other embodiments, the geographic information system may be in communication with the processor via the communications network (*e.g.,* internet) **110.** The display device **112** is used to display the map and the input device **114** is used to select a points on the map. In various exemplary embodiments, a first display device may be used to display video feeds from the cameras **102, 104, 106** and a second display device is used to display the map. Additionally or alternatively, the surveillance system **100** may include at least one sensor **118** such as a camera, a radar, and/or a motion detector. The sensor **118** is in electronic communication with the processor **108** via, for example, the computer network **110.**

## *Calibration*

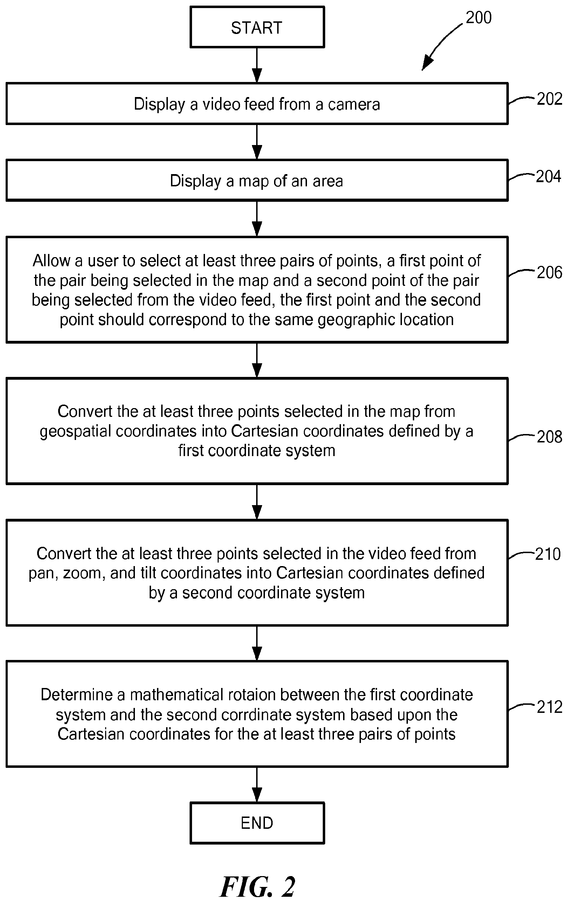

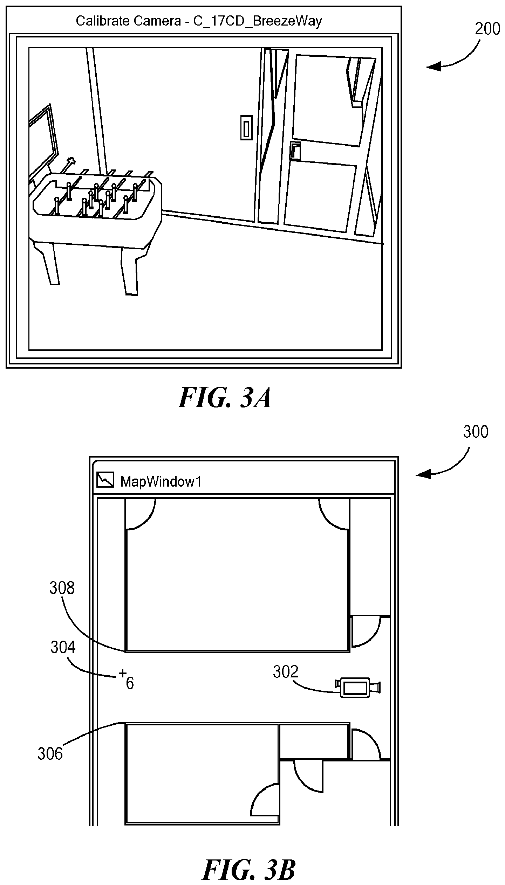

Illustrative embodiments of the present invention are directed to a method for calibrating a surveillance system (such as the one shown in Fig 1.). Fig. 2 shows a method **200** for calibrating a surveillance system in accordance with one embodiment of the present invention. The method includes displaying a video feed from a camera using a display device **202.** Fig. 3A shows a video feed **301** from a camera in accordance with one embodiment of the present invention. In the present example, the video feed **301** shows the breeze way of a building. In illustrative embodiments, the camera is a PTZ camera with an orientation that characterized by pan, zoom, and tilt coordinates, however, the use of other cameras is also within the scope of the present invention.

The method also includes using the display device to display a map of an area **204.** Fig. 3B shows a map **300** of a building floor plan in accordance with one embodiment of the present invention. The floor plan includes a hallway that is located between two rooms. The map **300** is characterized by geospatial coordinates. In other words, each point on the map **300** can be defined in terms of a geospatial coordinates such as latitude and longitude. In some embodiments of the present invention, the map **300** does not include a coordinate for altitude. In such an embodiment, the altitude is assumed to be "0". In other illustrative embodiment of the present invention, every point on the map **300** is defined by an altitude coordinate and, therefore, every point on the map is defined by three coordinates: latitude, longitude, and altitude. In yet another embodiment of the invention, only some of the points on the map **300** are defined in terms of altitude. In such an embodiment, the altitude for points that are not defined can be extrapolated from adjacent points that do have defined altitudes. For example, if a first point at 30.000 degrees latitude and 20.000 degrees longitude does not have a defined altitude, then points closest to the first point can be used to extrapolate the altitude for the first point. In such an example, the method uses a second point, at 30.000 degrees latitude and 19.999 degrees longitude with an altitude of 4 feet, and a third point, at 30.000 degrees latitude and 20.001 degrees longitude with an altitude of 10 feet, to assume that the altitude for the first point is about 7 feet. In illustrative embodiments, various other extrapolation techniques can also be used. For example, in some embodiments, algorithms for smoothing the extrapolated altitudes may be used.

Illustrative embodiments of the map **300** also show the location of a camera on the map using a camera icon **302**. In this manner, a user can view the map **300** and understand the vantage point and perspective of the video feed from the camera. In Fig. 3B, a camera icon **302** shows the location of the camera at the end of the hallway.

The map **300** also displays an input device **304** so that the user can select points on the map **300**. In Fig. 3B, the input device **304** is a crosshair, however, in other embodiments the input device can take the form of, for example, an arrow, a touch screen, and/or a menu.

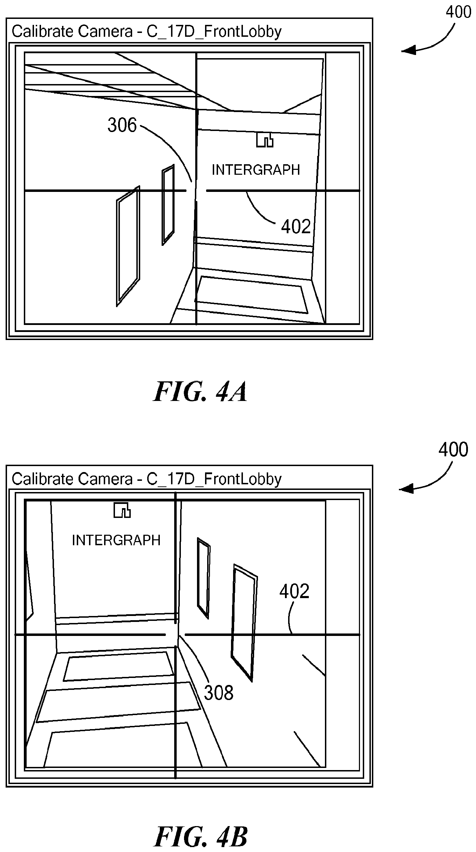

Illustrative embodiments of the calibration method allow the user to select at least three pairs of points using the input device **304, 206**. A first point of the pair is selected in the map **300** using the input device **304**. In Fig. 3B, the user selects a left corner **306** in the hallway using the crosshair **304**. The processor registers the particular geospatial coordinates for the selected point. Once the user selects the first point in the map **300,** he then selects the second point of the pair from a video feed. Fig. 4A shows a video feed **400** in accordance with one embodiment of the present invention. The video feed **400** and the map **300** may be simultaneously displayed in separate windows on one display device or each separately on its own display device. In Fig. 4A, the user uses a crosshair **402** to select the left corner **306** in the hallway in the video feed **400**. When the user selects a point in the video feed **400,** a processor queries the camera for its orientation (*e.g.,* pan angle, tilt angle, and zoom). Once the orientation is received from the camera, the processor registers the particular orientation of the camera. The first and second points in the pair should be selected so that they correspond to the same geographic location. In this manner, the method appropriately calibrates the video feed **400** to the map **300.**

Once the first pair of points is selected, the user selects a second pair of points. In Fig. 3B, the user selects a first point of the pair as a right corner **306** in the hallway. The second point of the pair is then selected in the video feed **400.** Fig. 4B shows the video feed **400** in accordance with one embodiment of the present invention. In Fig. 4B, the user has shifted the orientation of the camera and, therefore, the video feed **400** displays a different part of the hallway. The user uses the crosshair **402** to select the right corner **308** of the hallway as it appears in the video feed **400.**

Once the second pair of points is selected, the user selects a third pair of points. In illustrative embodiments of the present invention, the user selects three pairs of points, however, in other exemplary embodiments, the user may selects 4, 5, or more pairs of points for the calibration. In some exemplary embodiments, using more pairs of points results in a more accurate calibration because any error within the coordinates of one point is averaged over a greater number of points.

In illustrative embodiments of the present invention, as described above, the user selects the first point of the pair in the map **300** and then the second point of the pair in the video feed **400**. Once the first pair of points is selected, the user then selects the next pair of points. The embodiments of the present invention, however, are not limited to this particular order. In fact, the points can be selected in any order so long as there are at least three pairs of points selected. For example, in one illustrative embodiment, the user first selects a point of the pair in the video feed **400** and then selects the other point of the pair in the map **300**. In yet another illustrative embodiment, the user first selects all three points in the video feed **400** and then selects corresponding points in the map **300**.

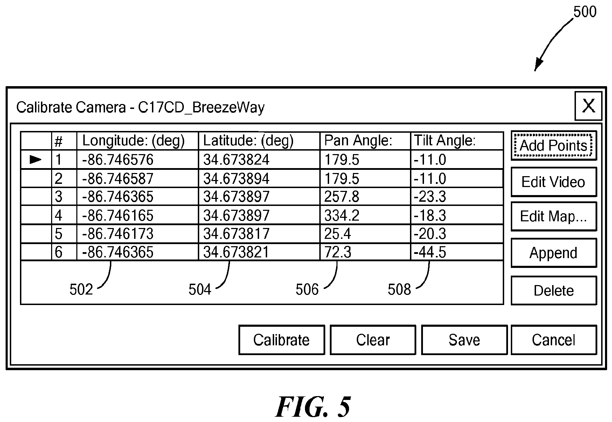

Fig. 5 shows a table **500** of selected points in accordance with one embodiment of the present invention. The table includes 6 pairs of points and lists the particular coordinates for each of the pairs. Columns **502** and **504** list the geospatial coordinates for the points selected in the map **301**. Columns **506** and **508** list the camera orientations for the points selected in the video feed **400**. The geospatial coordinates in the table **500** are latitude, longitude, and altitude (altitude not displayed), while the coordinates for the camera coordinates are pan angle, tilt angle, and zoom (zoom not displayed).

In various embodiments of the calibration method, the pan, tilt, and zoom orientation of the camera for each point in the video feed are converted into effective pan and tilt angles for the points themselves. The processor initially registers the orientation of the camera itself, but these initial pan and tilt angles are representative of the center of the video feed. When a user selects points away from the center of the video feed **400,** the effective pan and tilt angles for the points will be different from the pan and tilt orientation of the camera itself. To determine the effective pan and tilt angles for the points, a horizontal angular field of view ($H_{FOV}$) and vertical angular field of view ($V_{FOV}$) is determined using Equations 1 and 2:

$$H_{FOV} = Zoom \qquad\qquad (1)$$

$$V_{FOV} = Zoom \times \frac{1}{AspectRatio} \qquad (2)$$

The effective pan angle ($\theta$) can be calculated using Equation 3,

$$\theta = H_{FOV} \times \frac{H_D}{W_{Videofeed}} + Pan \qquad (3)$$

wherein $H_D$ is the horizontal distance (*e.g.,* in pixels) from the center of the video feed **400** to the point, and $W_{Videofeed}$ is the width of the video feed (*e.g.,* in pixels). Also, the effective tilt angle ($\varphi$) can be calculated using Equation 4,

$$\varphi = V_{FOV} \times \frac{V_D}{H_{Videofeed}} + Tilt \qquad (4)$$

wherein $V_D$ is the vertical distance (*e.g.,* in pixels) from the center of the video feed **400** to the point, and $H_{Videofeed}$ is the height of the video feed (*e.g.,* in pixels).

Illustrative embodiments of the calibration method also include converting the at least three points selected in the video feed **400** from effective pan and tilt angles to Cartesian coordinates defined by a Cartesian coordinate system **210**. In various embodiments of the calibration method, the effective pan and tilt angles are converted to unit vectors on a "camera" Cartesian coordinate system that has its origin at the camera's location. The effective pan and tilt angles can be converted into Cartesian coordinates using Equations 5, 6, and 7:

$$u = \cos(\varphi) \times \sin(\theta) \qquad (5)$$

$$v = \cos(\varphi) \times \cos(\theta) \qquad (6)$$

$$w = \sin(\varphi) \qquad (7)$$

In this manner, Cartesian coordinates are calculated for the effective pan ($\theta$) and tilt ($\varphi$) angles of each point selected in the video feed **400**.

Illustrative embodiments of the calibration method further include converting the three points selected in the map **300** from geospatial coordinates into Cartesian coordinates defined by a coordinate system **208**. The coordinate system can be created using a geospatial location for a point ($P_{lat}$, $P_{lon}$, $P_{alt}$) and a geospatial location for the camera ($C_{lat}$, $C_{lon}$, $C_{alt}$). The origin of the "map" Cartesian coordinate system is set as the location of the camera. In illustrative embodiments, the x-axis of the coordinate system points east, the y-axis points north, and the z-axis points in a direction away from and normal to the Earth.

The distance from the camera to the point along the x-axis can be calculated using Equation 8:

$$X_P = R_E \times sin(P_{lat} - C_{lat}) + (R_E \times cos(P_{lat})) \times (1 - cos(P_{lon} - C_{lon})) \times sin(C_{lat}) \quad (8)$$

The distance from the camera to the point along the *y*-axis can be calculated using Equation 9:

$$Y_P = R_E \times cos(P_{lat})) \times sin(P_{lon} - C_{lon})) \qquad (9)$$

The distance from the camera to the point along the *z*-axis can be calculated using Equation 10:

$$Z_P = -C_{alt} = -P_{alt} \qquad (10)$$

In each of Equations 8, 9, and 10, $R_E$ is the semi-major axis of the earth, which can be calculated according to Equation 11,

$$R_E = (1 - K_{flat}) \times \sin^2(P_{lat}) \times R_a \qquad (11)$$

wherein $K_{flat}$ is the Earth flatness constant, which is approximately 1/298.257, and $R_a$ is the radius of the Earth, which is approximately 6,378,137 meters. Accordingly, using Equations 8, 9, and 10, the Cartesian coordinates for the point are ($X_P$, $Y_P$, $Z_P$) and the Cartesian coordinates for the camera are (0, 0, 0).

In illustrative embodiments, the three points selected from the video feed are then converted into unit vectors. The unit vectors can be determined using Equations 12, 13, and 14:

$$u = X_P / \sqrt{X_P^2 Y_P^2 Z_P^2} \qquad (12)$$

$$v = Y_P / \sqrt{X_P^2 Y_P^2 Z_P^2} \qquad (13)$$

$$w = Z_P / \sqrt{X_P^2 Y_P^2 Z_P^2} \qquad (14)$$

Accordingly, each of the three points selected from the map is defined as a unit vector ($u$, $v$, $w$) of the "map" Cartesian coordinate system.

In the illustrative embodiments discussed above, the map **300** is characterized by geospatial coordinates such as latitude, longitude, and altitude. In other embodiments, however, the map is already characterized by a Cartesian coordinate system (before the above described calibration process) and, therefore, a conversion from geospatial coordinates to a Cartesian coordinate system may not be necessary.

Illustrative embodiments of the present invention further include determining a mathematical rotation between the "map" coordinate system and the "camera" coordinate system based upon the Cartesian coordinates for the at least three pairs of points selected from the map and the video feed **212.** The mathematical rotation provides a conversion from points in the "map" coordinate system to corresponding points in the "camera" coordinate system. The transform of the rotation provides a conversion from points in the "camera" coordinate system to corresponding points in the "map" coordinate system. Or vice versa, a transform of the mathematical rotation provides a conversion from points in the "camera" coordinate system to corresponding points in the "map" coordinate system, and its transform provides a conversion from points in the "map" coordinate system to corresponding points in the "camera" coordinate system. As used in the present application, the term "rotation" also includes a transform of the rotation.

It is known in the art how to develop a mathematical rotation (and its transform) between a first Cartesian coordinate system and a second Cartesian Coordinate system. For example, in various embodiments, the mathematical rotation is a four-by-four matrix that is applied to unit vectors that define a point in one of the "camera" and "map" coordinate systems. The four-by-four rotation is determined by developing an initial four-by-four matrix. The initial four-by-four matrix is developed according to, for example, Section 4 of Berthold K. P. Horn, "Closed-form Solution of Absolute Orientation Using Unit Quaternions" 4 Journal of the Optical Society of America 629 (April 1987). Eigenvectors for the initial four-by-four matrix are then calculated using a Jacobi Eigenvalue algorithm as known in the art. The calculation of the Eigenvalues can be software coded as disclosed in, for example, Section 11.1 of William H. Press et al., "Numerical Recipes in C" (Cambridge University Press 2d ed.) (1992). Once the eigenvectors are calculated, an eigenvector corresponding to the most positive eigenvalue is selected as the rotation matrix. In illustrative embodiments, the rotation matrix is stored by the processor as a quaternion.

Illustrative embodiments of the present invention are advantageous over many prior art systems because there is no need for the camera to be accurately aligned with other reference points. For example, many prior art systems require pan-zoom-tilt cameras to be level with the ground when installed and/or to be properly aligned with a particular coordinate system. If not properly aligned, the camera will not accurately shift and capture points of interest. The inventors have overcome this problem by calibrating the camera using a mathematical rotation between a first Cartesian coordinate system and a second Cartesian coordinate system. In illustrative embodiments of the present invention, the inventors discovered that the above disclosed calibration accounts for any misalignment of the camera with the ground or coordinate system. In the past, calibration of a camera with a map of an area was not approached as a problem that could be solved through the use of a mathematical rotation between two Cartesian coordinate systems, perhaps, because latitude-longitude coordinates and the motion of a pan-zoom-tilt camera does not correspond with a Cartesian coordinate system.

*Camera Control Using the Map*

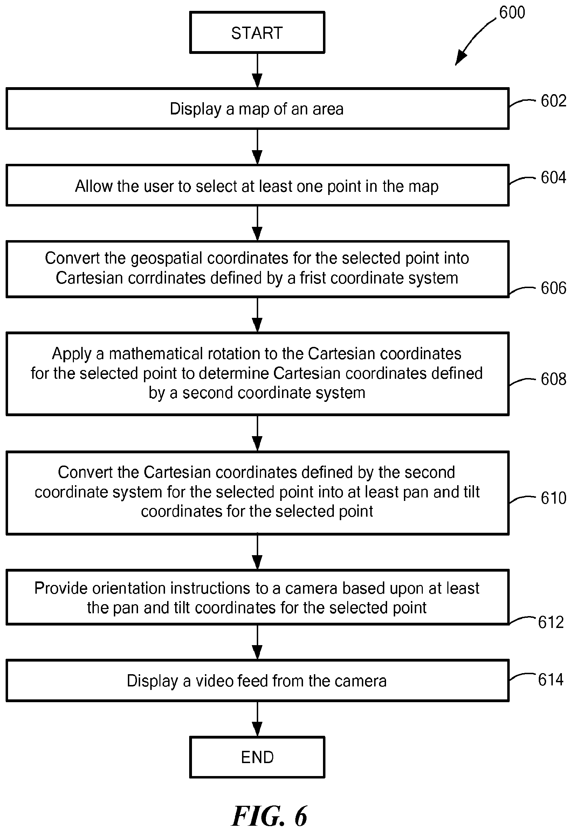

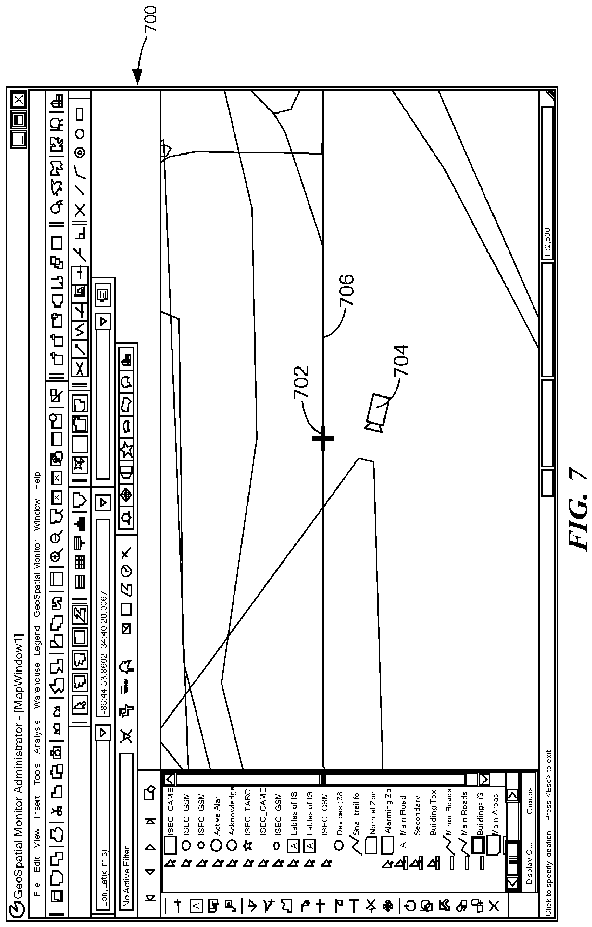

Illustrative embodiments of the present invention are also directed to a computer-implemented method for controlling a camera in a surveillance system (such as the system shown in Fig. 1). Fig. 6 shows a method **600** for controlling at least one camera in accordance with one embodiment of the present invention. The method includes displaying a map of an area using a display device **602.** Fig. 7 shows a map **700** of an outdoor terrain in accordance with one embodiment of the present invention. The map **700** is characterized by geospatial coordinates such as latitude, longitude, and altitude. The method further includes allowing a user to select a point of interest in the map **700** using an input device **604.** In the embodiment of Fig. 6, the input device is a crosshair **702.** In illustrative embodiments of the present invention, the orientation of a camera **704** then shifts so that the camera observes the point of interest. In this manner, the user controls the camera **704** and its orientation by simply selecting a point in the map **700** using the crosshair **702.** Thus, the user can use a geospatial interface to automate camera control. In the example of Fig. 7, the user is interested in activity on a road **706** that runs through the map **700.** By selecting a point on the road **706** in the map **700,** the camera **704** automatically shifts its orientation to the road and the user can view the activity on the road via the video feed from the camera.

In illustrative embodiments, once the user selects the point on the map, a processor converts the geospatial coordinates for the selected point into Cartesian coordinates defined by a coordinate system **606.** In exemplary embodiments, the conversion is performed using Equations 8, 9, 10, 11, 12, 13, and 14, as described in the "Calibration" section of present application. Accordingly, the geospatial coordinates for the point are defined as unit vectors of a "map" Cartesian coordinate system. The processor **108** then applies a mathematical rotation to the "map" Cartesian coordinates for the selected point to determine Cartesian coordinates defined by a "camera" Cartesian coordinate system **608.** The "camera" coordinate system characterizes a video feed from the camera and a mathematical rotation (or its transform) provides a conversion between the "map" coordinate system and the "camera" coordinate system. In illustrative embodiments, the mathematical rotation is developed according to the method described in the "Calibration" section of the present application.

The Cartesian coordinates for the selected point (*e.g.,* unit vectors *u, v, w*) are then defined in terms of pan, zoom, and tilt coordinates (*e.g.,* pan ($\theta$) and tilt ($\varphi$)) **610.** The Cartesian coordinates (defined by the "camera" coordinate system) can be converted to pan and tilt angles using Equations 15 and 16:

$$\theta = atan^2 (u,v) \qquad\qquad (15)$$

$$\varphi = atan(\frac{w}{\sqrt{u^2 + v^2}}) \qquad\qquad (16)$$

Accordingly, the selected point is defined in terms of a pan and tilt angles of the camera. Based on these pan and tilt angles, the processor can provide orientation instructions to the camera so that the camera shifts to view the selected point and the video feed of the selected point is thus displayed to the user **612, 614.**

*Target Tracking*

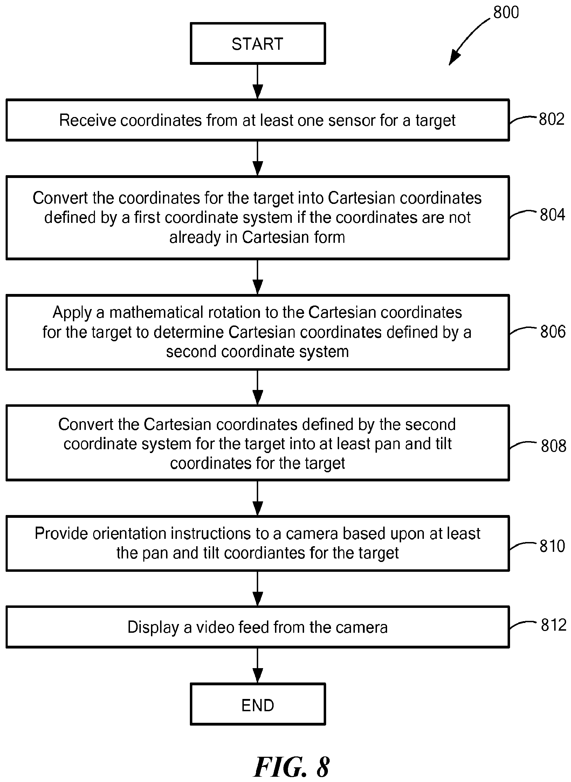

Illustrative embodiments of the present invention are also directed to a computer-implemented method for tracking a target using at least one camera and at least one sensor (*e.g.,* such as those shown in Fig. 1). Fig. 8 shows a method **800** for tracking a target in accordance with one embodiment of the present invention. The method includes receiving coordinates for the target at a processor from the sensor **802.** In some embodiments, the coordinates for the target that are received from the sensor and the coordinates are already defined in terms of a Cartesian coordinate system that characterizes a map of an area. For example, in some embodiments, the Cartesian coordinates for a motion detector in the map are determined when the detector is placed in the area. Therefore, if the motion detector is set-off, then the processor can assume that the target is located near the coordinates of the motion detector and uses the coordinates of the sensor defined by the "map" coordinate system to determine an appropriate camera action. In other embodiments, however, the coordinates for the target that are received from the sensor are defined in terms of a geospatial coordinate system. In such an embodiment, the geospatial coordinates are converted into Cartesian coordinates defined by the "map" coordinate system **804.** In exemplary embodiments, the conversion is performed using Equations 8, 9, 10, 11, 12, 13, and 14, as described in the "Calibration" section of present application. In this manner, the geospatial coordinates for the target are defined as unit vectors (*u, v, w*) of the "map" Cartesian coordinate system.

The method for target tracking also includes applying a mathematical rotation (or its transform) to the "map" Cartesian coordinates for the target to determine Cartesian coordinates defined by a "camera" Cartesian coordinate system **806.** The "camera" coordinate system defines a video feed from the camera and the mathematical rotation provides a conversion between the "map" coordinate system and the "camera" coordinate system. In illustrative embodiments, the mathematical rotation is developed according to the method described in the "Calibration" section of the present application.

The Cartesian coordinates for the target ($u$, $v$, $w$) are then defined in terms of pan, zoom, and tilt coordinates (*e.g.,* pan "$\theta$" and tilt "$\varphi$") for the camera **808.** In various illustrative embodiments, the Cartesian coordinates are converted to pan and tilt angles using Equations 15 and 16, as described in the "Camera Control Using the Map" section of present application. Accordingly, the target is defined in terms of a pan and tilt angles of the camera. Based on these pan and tilt angles, the processor provides orientation instructions to the camera so that the camera shifts to view the target **810, 812.**

In illustrative embodiments, the processor continuously receives coordinates from the sensor and iteratively determines camera instructions based upon the new coordinates. In this manner, the processor and the camera automatically track the target as it moves through the area.

Illustrative embodiments of the target tracking method may also display a map that shows the location of the sensor using a sensor icon. Furthermore, in additional or alternative embodiments, the map displays the location of the target in the area using a target icon. The processor can use the geospatial and/or "camera" Cartesian coordinates for the sensor and/or target to display them on the map. By displaying the target, sensor, and cameras on the map, the user can better understand the location of the target in relation to the sensors and cameras.

*Prioritization of Cameras*

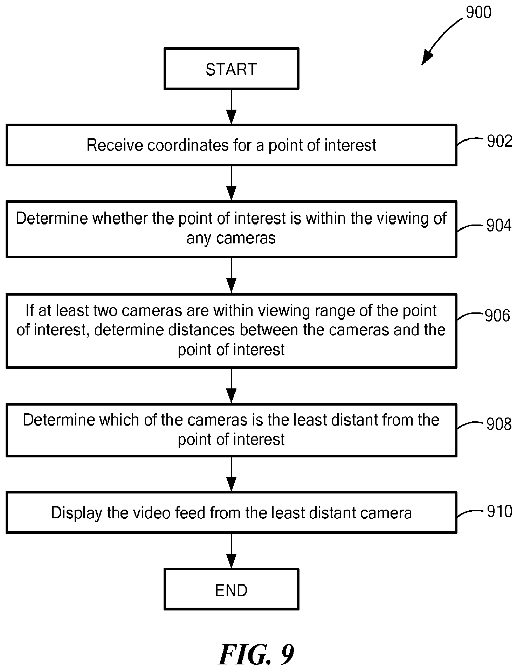

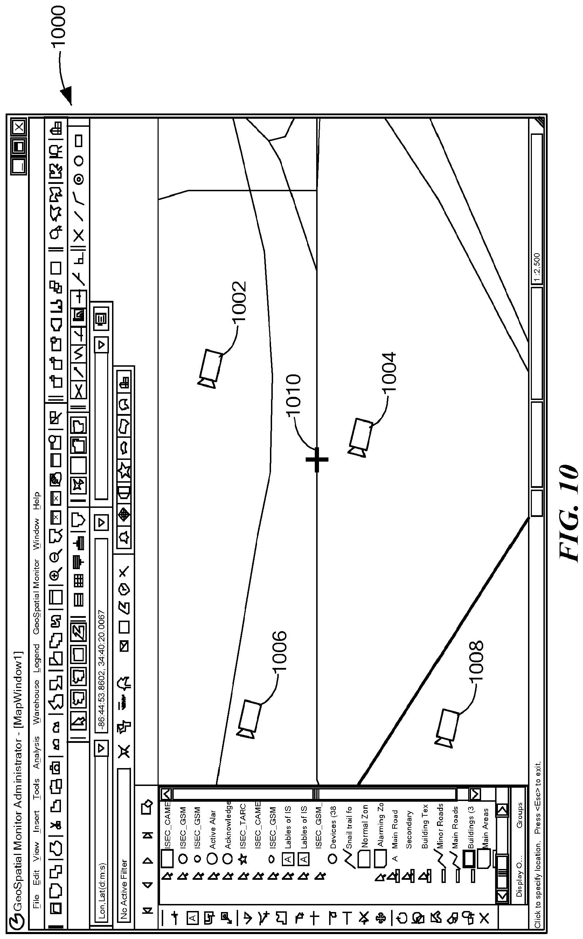

Illustrative embodiments of the present invention are also directed to a computer-implemented method for prioritizing video feeds from a plurality of cameras (such as the ones shown in Fig 1). Fig. 9 shows a method **900** for prioritizing video feeds from a plurality of cameras in accordance with one embodiment of the present invention, while Fig. 10 shows a map **1000** of an outdoor terrain including a plurality of cameras **1002, 1004, 1006, 1008** in accordance with another embodiment of the present invention.

Illustrative embodiments of the method include receiving geospatial coordinates for a point of interest **1010, 902.** In the embodiment shown in Fig. 10, the point of interest **1002** is selected by a user from the map **1000** using a display device and an input device. In other illustrative embodiments, the coordinates for the point of interest are representative of a target and the coordinates are received from a sensor. Once the coordinates for the point of interest are received, in various embodiments, one or more cameras **1002, 1004, 1006, 1008** shift their orientation to capture the point of interest **1010.** In illustrative embodiments of the present invention, the cameras **1002, 1004, 1006, 1008** are assigned a prioritization based upon their distance from the point of interest **1010.**

Various exemplary embodiments of the prioritization method include determining whether the point of interest **1010** is within the viewing range of any of the cameras **1002, 1004, 1006, 1008, 904.** In some exemplary embodiments, the method also includes determining which cameras **1002, 1004, 1006, 1008** are available for viewing the point of interest (*e.g.,* some cameras may be tracking a different target or the user may not have permission to use certain cameras).

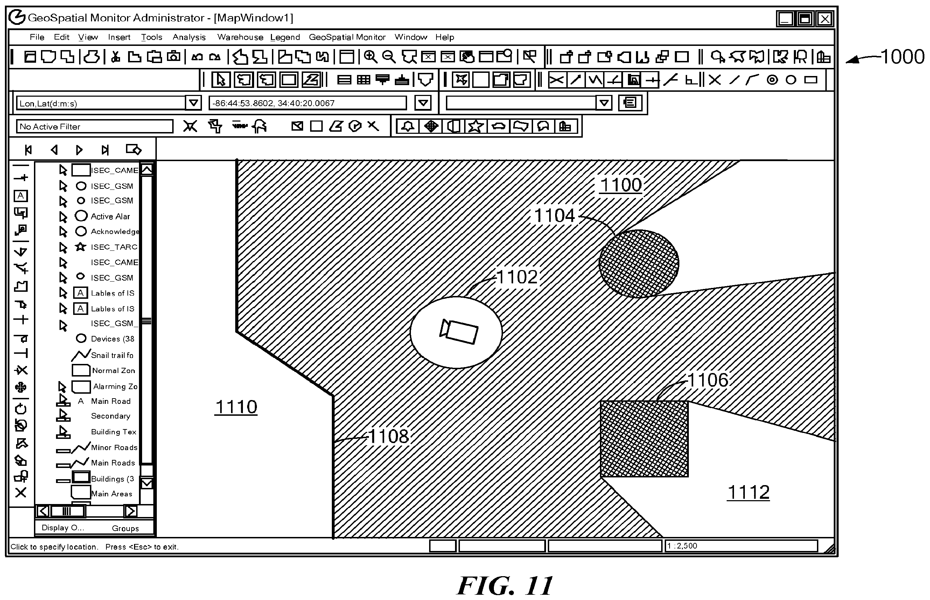

Fig. 11 shows a viewing range **1100** of a camera **1102** in accordance with one embodiment of the present invention. As shown in Fig. 11, the viewing range **1100** of the camera **1102** can also be defined to account for obstacles **1104, 1106, 1108.** For example, in Fig. 11, the viewing range **1100** of the camera **1102** is blocked by a wall **1108** and, accordingly, the area **1110** that appears behind the wall is omitted from the viewing range. Similarly, a house **1106** is also in the way of the viewing range **1100** and thus the area **1112** behind the house is also omitted from the viewing range.

In various exemplary embodiments, the viewing range for each camera is defined by the user. To this end, in illustrative embodiments, the user can use an input device to outline the viewing range **1100** for the camera **1102** within a displayed map, as shown in Fig. 11. In illustrative embodiments, the user can outline the viewing range of the camera by generating a plurality of line segments having starting points and end points. The user then closes the line segments to form a polygon that has vertices defined by the starting points and endpoints of the line segments. In this manner, the viewing range of the camera can be defined as relatively complex and irregular area, such as the viewing range **1100** shown in Fig. 11. In some cases, it may be appropriate to represent the viewing range of the camera using a plurality of polygons. In various exemplary embodiments, the vertices of the polygon are defined in terms of geospatial coordinates, however, in other embodiments, the vertices are defined in terms of a "map" Cartesian coordinate system or even a "camera" coordinate system.

In exemplary embodiments, to determine whether the point of interest **1010** is within the viewing range of any of the cameras **1002, 1004, 1006, 1008,** the method determines whether the point of interest appears within the polygonal viewing range of each of the cameras. To this end, illustrative embodiments of the present invention use various point-in-polygon algorithms known in the art. In one example of such an algorithm, the method assumes a horizontal line starting at the point of interest and continuing across the map. If the assumed horizontal line intersects the line segments of the polygon an even number of times (*e.g.,* 0, 2, 4), then the point of interest is outside the polygon. If the assumed line intersects the polygon an odd number of times (*e.g.,* 1, 3, 5), then the point of interest is within the polygon. In another example, the sum of the angles made between the point of interest and each vertex (or point) making up the polygon are computed. If the sum is 360 degrees (*e.g.,* $2\pi$), then the point of interest is interior to the polygon. If the sum is 0 degrees, then the point of interest is exterior to the polygon and, therefore, also exterior to the viewing range of the camera. Further details of point-in-polygon algorithms can be found in the reference: Paul Bourke, "Determining If a Point Lies on the Interior of a Polygon" (Nov. 1987) (accessible at http://local.wasp.uwa.edu.au/~pbourke/geometry/insidepoly/).

In one exemplary case, if only one camera has the viewing range to capture the point of interest, the processor provides orientation instructions to that camera to capture the point of interest. In another example, if there are at least two cameras with the viewing range to capture the point of interest, the processor determines the distances between the two cameras and the point of interest **906**. If the camera locations and the point of interest are both defined in terms of a Cartesian coordinate system (*e.g.,* the "map" Cartesian coordinate system an/or the "camera" Cartesian coordinate system discussed above), then the distance between the cameras and the point of interest can be calculated according to Equation 17,

$$D = \sqrt{(X_C - X_P)^2 + (Y_C - Y_P)^2 + (Z_C - Z_P)^2} \qquad (17)$$

wherein $(X_C, Y_C, Z_C)$ are the Cartesian coordinates for the camera and $(X_P, Y_P, Z_P)$ are the Cartesian coordinates for the point of interest. Equation 17 is particularly accurate for use with surveillance systems that do not need to account for the curvature of the earth (*e.g.,* surveillance systems within buildings). If the camera locations and the point of interest are both defined in terms of a geospatial coordinate system (*e.g.,* latitude, longitude, and altitude), then the Cartesian distance can be calculated using Equations 8, 9, 10, and 11 as described in the "Calibration" section of the present application. The distance can then be calculated using Equation 17 as described in this section. The benefit of using Equations 8, 9, 10, and 11 is that they account for the curvature of the Earth and, thus, provide better accuracy for surveillance systems that survey, for example, outdoor terrains. Further details of calculating distances between geospatial coordinates can be found in the reference: Ivan S. Ashcroft, "Projecting an Arbitrary Latitude and Longitude onto a Tangent Plane" Brigham Young University (Jan. 21, 1999).

Once the distances between the point of interest and the cameras are determined, the processor determines which of the cameras is the least distance from the point of interest **908**. In illustrative embodiments of the present invention, the least distance camera is then provided with orientation instruction based upon the coordinates of the point of interest and the video feed from the least distance camera is displayed on a display device **910.**

Illustrative embodiments of the present invention are particularly beneficial when a surveillance system includes a plurality of cameras but only has a limited bandwidth and/or a limited number of display devices to display video feeds. In this case, exemplary embodiments of the present invention allow the system to prioritize the cameras and display the video feed from the camera that is closest to the point of interest and has the best view of the point of interest.

Furthermore, illustrative embodiments of the present invention no longer rely on the user's manual control to capture a point of interest or a moving object. For example, if a target is walking in a field and suddenly hides behind a wall, then the target might not be within the viewing range of a camera located in front of the wall, but the target might still be within the viewing range of another camera located behind the wall. In some prior art systems, the user would need to manually toggle between the two cameras in order to capture the target behind the wall. Illustrative embodiments of the present invention, however, automatically prioritize and display video feeds based on the camera's range of view and distance from the target.

### View Cone

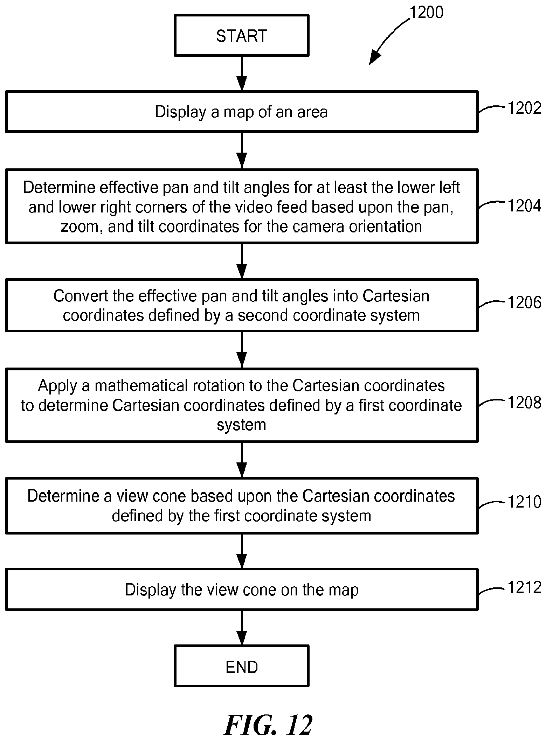

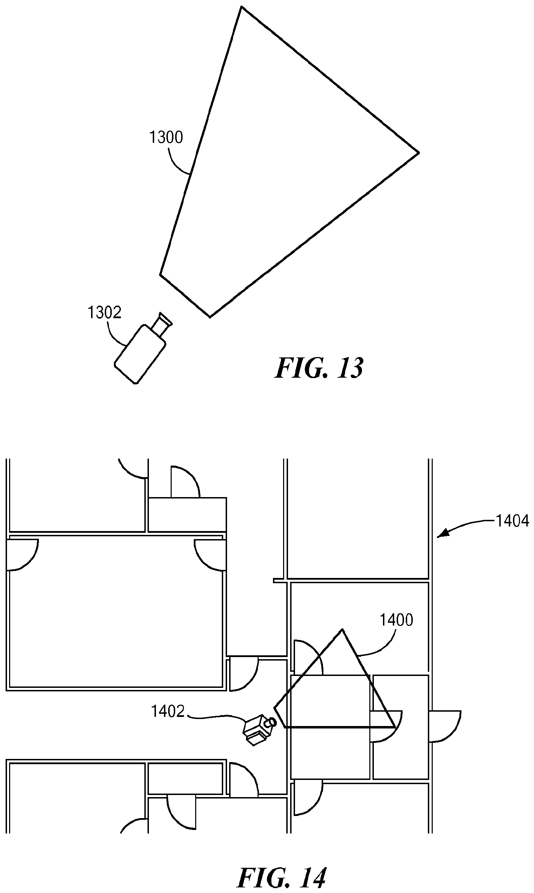

Illustrative embodiments of the present invention are also directed to a computer-implemented method for displaying a view cone for a camera. Fig. 12 shows a method **1200** for displaying a view cone for at least one camera in accordance with one embodiment of the present invention. Fig. 13 shows a view cone **1300** and a camera icon **1302** in accordance with one embodiment of the present invention. In exemplary embodiments of the present invention, the view cone **1300** is representative of the field of view of the camera. Using the view cone **1300** is particularly advantageous when it is applied to a map because it helps the user understand the vantage point and perspective of the camera within an area. Fig. 14 shows a view cone **1400** and camera icon **1402** as applied to a map **1404** in accordance with one embodiment of the present invention **1202.**

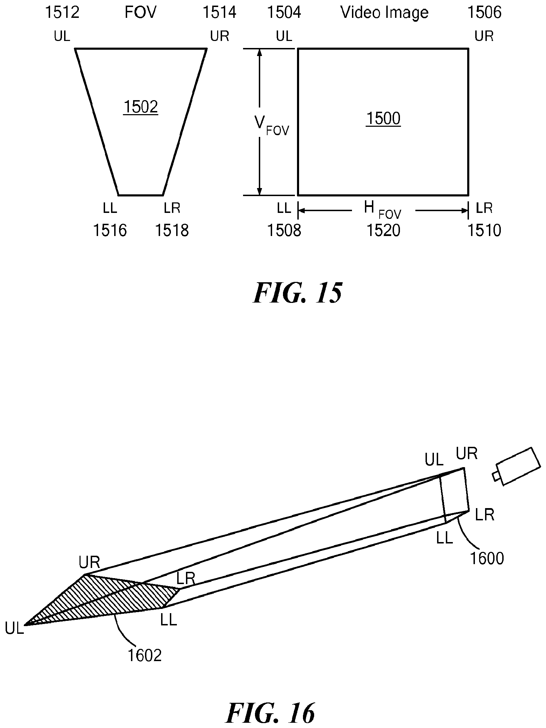

In illustrative embodiments of the present invention, the view cone is created by transposing the effective coordinates of the upper left, upper right, lower left, and lower right corners of a video feed onto a map. Fig. 15 shows a video feed **1500** and field of view cone **1502** in accordance with another embodiment of the present invention. The video feed **1500** includes upper left **1504,** upper right **1506,** lower left **1508,** and lower right corners **1510.** The view cone **1502** also includes upper left **1512,** upper right **1514,** lower left **1516,** and lower right vertices **1518.** In illustrative embodiments of the present invention, the view cone **1502** is created by transposing the effective coordinates of the upper left **1504,** upper right **1506,** lower left **1508,** and lower right corners **1510** of the video feed **1500** onto upper left **1512,** upper right **1514,** lower left **1516,** and lower right vertices **1518** of the view cone **1502.** The advantage of creating the view cone based upon the effective coordinates of the video feed is that, when the orientation of the camera shifts, the view cone **1502** on the map also changes to better represent the field of view of the camera.

In illustrative embodiments of the present invention, the effective coordinates of the upper left **1504,** upper right **1506,** lower left **1508,** and lower right corners **1510** of the video feed **1500** are determined from the orientation of the camera (*e.g.,* the pan, zoom, and tilt coordinates for the camera). For each of the upper left **1504,** upper right **1506,** lower left **1508,** and lower right corners **1510** of the video feed **1500,** effective pan and tilt angles are calculated **1204.** To determine the effective pan and tilt angles for the points, a horizontal angular field of view ($H_{FOV}$) **1520** and vertical angular field of view ($V_{FOV}$) **1522** is determined using, for example, Equations 1 and 2, as described in the "Calibration" section of the present application. Next, the effective pan and tilt angles ($\theta, \varphi$) for each of the corners **1504, 1506, 1508,** and **1510** is determined using, for example, Equations 3 and 4 as described above in the "Calibration" section of the application.

In exemplary embodiments of the present invention, the effective pan and tilt angles ($\theta, \varphi$) for the corners **1504, 1506, 1508,** and **1510** are converted to Cartesian coordinates defined by a Cartesian coordinate system **1206.** In various embodiments of the method, the effective pan and tilt angles are converted to unit vectors ($u, v, w$) on a "camera" Cartesian coordinate system that has its origin at the camera's location. The effective pan and tilt angles can be converted into Cartesian coordinates using Equations 5, 6, and 7, as described in the "Calibration" section of the present application.

To transpose the corners **1504, 1506, 1508,** and **1510** of the video feed **1502** to corners **1512, 1514, 1516,** and **1512** of the view cone **1500** on the map, a mathematical rotation (or its transform) is applied to the "camera" Cartesian coordinates for the corners **1504, 1506, 1508,** and **1510, 1208.** The mathematical rotation (or its transform) determines unit vectors ($u, v, w$) defined by a "map" Cartesian coordinate system. The "map" coordinate system defines the map and the mathematical rotation provides a conversion between the "camera" coordinate system and the "map" coordinate system. In illustrative embodiments, the mathematical rotation is developed according to the method described in the "Calibration" section of the present application. After the mathematical rotation, the unit vectors ($u, v, w$) are converted to scaled Cartesian coordinates using Equations 18, 19, and 20:

$$X_P = u \times ScalingFactor \tag{18}$$

$$Y_P = v \times ScalingFactor \tag{19}$$

$$Z_P = w \times ScalingFactor \tag{20}$$

In various embodiments of the present invention, the scaling factor can be determined using Equation 21,

$$ScalingFactor = \left| \frac{C_{alt}}{w} \right| \tag{21}$$

wherein, in various embodiments, $C_{alt}$ is the altitude of the camera above the ground. In illustrative embodiments of the present invention, the scaled "map" Cartesian coordinates ($X_P, Y_P, Z_P$) for the corners **1504, 1506, 1508,** and **1510** are used to determine the view cone **1500** and the view cone is then displayed on the map 1210, 1212. In more specific illustrative embodiments, as shown in Fig. 15, the view cone is a polygon and the "map" Cartesian coordinates for the corners **1504, 1506, 1508,** and **1510** are used to define the vertices **1512, 1514, 1516,** and **1512** of the view cone **1500.**

In yet another embodiment of the present invention, the scaled "map" Cartesian coordinates ($X_P, Y_P, Z_P$) for the corners **1504, 1506, 1508,** and **1510** are converted into geospatial coordinates ($P_{lat}, P_{lon}, P_{alt}$). In various exemplary embodiments, the "map" Cartesian coordinates ($X_P, Y_P, Z_P$) can be converted into geospatial coordinates ($P_{lat}, P_{lon}, P_{alt}$) by determining deltas for longitude and latitude using Equations 22 and 23,

$$\Delta_{lat} = \arcsin \frac{X_P}{R_{lon}} \tag{22}$$

$$\Delta_{lon} = \arcsin \frac{Y_P - (1 - \cos(\Delta_{lat}) \times \sin(C_{lat}) \times R_{lon}}{R_E} \qquad (23)$$

wherein $C_{lat}$ is the known latitudinal geospatial coordinate for the camera, $R_E$ can be calculated from Equation 11 above, and $R_{lon}$ is unknown, but can be estimated as approximately equal to the longitudinal coordinate of the camera "$C_{lon}$". Further details for converting Cartesian coordinates into geospatial coordinates can be found in the reference: Ivan S. Ashcroft, "Projecting an Arbitrary Latitude and Longitude onto a Tangent Plane" Brigham Young University (Jan. 21, 1999).

In illustrative embodiments of the present invention, once the deltas "$\Delta_{lat}$ and $\Delta_{lat}$" are determined, they can be used to determine the geospatial coordinates ($P_{lat}$, $P_{lon}$, $P_{alt}$) for the corners **1504, 1506, 1508,** and **1510** using Equations 24, 25, and 26,

$$P_{lat} = C_{lat} + \Delta_{lat} \qquad (24)$$

$$P_{lon} = C_{lon} + \Delta_{lon} \qquad (25)$$

$$P_{alt} = C_{alt} \qquad (26)$$

wherein ($C_{lat}$, $C_{lon}$, $C_{alt}$) are the known geospatial coordinates of the camera. Accordingly, in such an embodiment, the geospatial coordinates ($P_{lat}$, $P_{lon}$, $P_{alt}$) for the corners **1504, 1506, 1508,** and **1510** are used to determine the view cone **1500** and the view cone is then displayed on the map. In more specific illustrative embodiments, the view cone is a polygon and the geospatial coordinates for the corners **1504, 1506, 1508,** and **1510** are used to define the vertices **1512, 1514, 1516,** and **1512** of the view cone **1500.** Fig. 16 shows a video image **1600** with four corners transposed into a polygonal view cone **1602** with four vertices in accordance with one embodiment of the present invention.

In further illustrative embodiments of the present invention, the upper left **1512** and upper right vertices **1514** of the view cone **1500** are determined in a different manner. In some cases, when the tilt angle for the camera (or the effective tilt angle for at least one of the corners of the video feed) is above the horizon (*e.g.,* $\varphi$ is greater than 0), the transposition of the corners onto the map is not possible because the effective tilt angles for at least some of the corners never intersect the ground.

One illustrative method of resolving this issue, is to determine the upper left **1512** and upper right vertices **1514** of the view cone **1500** based upon a resolvable distance of the camera. The resolvable distance can be calculated using the resolution of the camera. Such an approach is advantageous because it better represents the true view field of the camera. In one illustrative embodiment, the view cone **1500** is displayed so that objects within the view cone can be identified in the video feed (*e.g.,* objects within the resolvable distance), while objects beyond the view cone cannot be distinguished from the background (*e.g.,* objects beyond the resolvable distance). In one illustrative embodiment, the resolvable distance corresponds to a distance at which a 4 meter long object (approximately the size of a vehicle) corresponds to two pixels on the display. In one embodiment, the resolvable distance is determined using Equation 27,

$$D = \left| \frac{\frac{W}{2} \times R}{\tan(\Theta)} \right| \qquad (27)$$

wherein $W$ is the width of the video feed in pixels, $R$ is the resolution of the camera in meters per pixel, and $\Theta$ is the horizontal angular field of view ($H_{FOV}$) **1520** divided by two. In some embodiments, the width of the video feed is communicated to a processor by the camera. In other illustrative embodiments, the width of the video feed is a fixed number, such as 320 pixels. Fig. 11 shows how the resolvable distance is calculated using a right triangle in accordance with one embodiment of the present invention. The calculated resolvable distance is then used to determine the upper left **1512** and upper right vertices **1514** of the view cone **1500.**

In one illustrative embodiment, the resolvable distance is projected along the effective pan angles ($\theta$) for the upper left **1504** and upper right **1506** corners of the video feed. The "map" Cartesian coordinate ($X_P$, $Y_P$, $Z_P$) for the upper left **1512** and upper right **1514** vertices can be determined according to Equations 28, 29 and 30,

$$X_P = (\sin(\theta) \times D) + X_C \tag{28}$$

$$Y_P = (\cos(\theta) \times D) + Y_C \tag{29}$$

$$Z_P = Z_C \tag{30}$$

wherein $(X_C, Y_C, Z_C)$ are the "map" Cartesian coordinates for the camera. In illustrative embodiments of the present invention, the "map" Cartesian coordinates $(X_P, Y_P, Z_P)$ for upper left **1512** and upper right **1514** vertices are then used to determine and display the view cone on the map. In other illustrative embodiments, these "map" Cartesian coordinates are converted into geospatial coordinates (*e.g.,* using Equations 22-26) and then used to determine and display the view cone on the map.

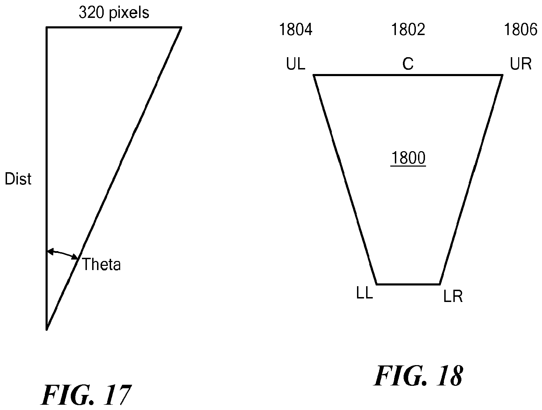

In another illustrative embodiment, instead of projecting the resolvable distance along the effective pan angles ($\theta$) for the corners **1504** and **1506,** the resolvable distance is projected along the pan angle ($\theta$) of the camera to a resolvable point. In some embodiments, the resolvable point is the center of the most distant edge of the view cone **1502.** Fig. 18 shows a view cone **1800** with the center **1802** of its most distant edge as the resolvable point, in accordance with one embodiment of the present invention. The "map" Cartesian coordinate $(X_R, Y_R, Z_R)$ for the resolvable point can be determined according to Equations 31, 32 and 33:

$$X_R = (\sin(\theta) \times D) + X_C \tag{31}$$

$$Y_R = (\cos(\theta) \times D) + Y_C \tag{32}$$

$$Z_R = Z_C \tag{33}$$

The resolvable point $(X_R, Y_R, Z_R)$ is then rotated left and right by half the horizontal field of view ($H_{FOV}$) **1520** to determine the "map" Cartesian coordinates $(X_P, Y_P, Z_P)$ for upper left **1804** and upper right **1806** vertices of the view cone. For the sake of computational efficiency in the processor, a matrix can be used to rotate the resolvable point. The "map" Cartesian coordinates $(X_P, Y_P, Z_P)$ for upper left **1804** and upper right **1806** vertices are then used to determine and display the view cone on the map. In other illustrative embodiments, however, the "map" Cartesian coordinates are converted into geospatial coordinates and then used to determine and display the view cone on the map.

In yet further illustrative embodiments, the projections discussed in Equations 28-33 of this section are performed in the "camera" Cartesian Coordinate system and are then converted into the "map" Cartesian coordinate system using a mathematical transformation (or its transform).

Illustrative embodiments of the present invention are not limited for use with cameras that are characterized by pan, zoom, and tilt coordinates (*e.g.,* pan-zoom-tilt cameras). For example, illustrative embodiments of the present invention may also be used with fixed cameras or other cameras that have a limited range of motion. Indeed, the above described methods of calibration and prioritization apply similarly to fixed cameras. Also, according to illustrative embodiments of the present invention, the view cone of the fixed camera can be modified as its zoom changes. Various embodiments of the present invention also have applicability to other types of cameras, such as cameras that are unable to shift their tilt orientation.

It should be noted that terms such as "system", "processor", "server", "input device", "display device", "communications network", and "database" may be used herein to describe devices that may be used in certain embodiments of the present invention and should not be construed to limit the present invention to any particular device type or system unless the context otherwise requires. Thus, a system may include, without limitation, a client, server, computer, appliance, or other type of device. Such devices typically include one or more network interfaces for communicating over a communication network (*e.g.,* computer network) and a processor (*e.g.,* a microprocessor with memory and other peripherals and/or application-specific hardware) configured accordingly to perform device and/or system functions. Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies, networking technologies, and internetworking technologies.

It should also be noted that devices may use communication protocols and messages (*e.g.,* messages created, transmitted, received, stored, and/or processed by the system), and such messages may be conveyed by a communication network or medium. Unless the context otherwise requires, the present invention should not be construed as being limited to any particular communication message type, communication message format, or communication protocol. Thus, a communication message generally may include, without limitation, a frame, packet, datagram, user datagram, cell, or other type of communication message. Unless the context requires otherwise, references to specific communication protocols are exemplary, and it should be understood that alternative embodiments may, as appropriate, employ variations of such communication protocols (*e.g.,* modifications or extensions of the protocol that may be made from time-to-time) or other protocols either known or developed in the future.

It should also be noted that logic flows may be described herein to demonstrate various aspects of the invention, and should not be construed to limit the present invention to any particular logic flow or logic implementation. The described logic may be partitioned into different logic blocks (*e.g.,* programs, modules, interfaces, functions, or subroutines) without changing the overall results or otherwise departing from the true scope of the invention. Often times, logic elements may be added, modified, omitted, performed in a different order, or implemented using different logic constructs (*e.g.,* logic gates, looping primitives, conditional logic, and other logic constructs) without changing the overall results or otherwise departing from the true scope of the invention.

The present invention may be embodied in many different forms, including, but in no way limited to, computer program logic for use with a processor (*e.g.,* a microprocessor, microcontroller, digital signal processor, or general purpose computer), programmable logic for use with a programmable logic device (*e.g.,* a Field Programmable Gate Array (FPGA) or other PLD), discrete components, integrated circuitry (*e.g.,* an Application Specific Integrated Circuit (ASIC)), or any other means including any combination thereof. In a typical embodiment of the present invention, predominantly all of the described logic is implemented as a set of computer program instructions that is converted into a computer executable form, stored as such in a computer readable medium, and executed by a microprocessor under the control of an operating system.

Computer program logic implementing all or part of the functionality previously described herein may be embodied in various forms, including, but in no way limited to, a source code form, a computer executable form, and various intermediate forms (*e.g.,* forms generated by an assembler, compiler, linker, or locator). Source code may include a series of computer program instructions implemented in any of various programming languages (*e.g.,* an object code, an assembly language, or a high-level language such as Fortran, C, C++, JAVA, or HTML) for use with various operating systems or operating environments. The source code may define and use various data structures and communication messages. The source code may be in a computer executable form (*e.g.,* via an interpreter), or the source code may be converted (*e.g.,* via a translator, assembler, or compiler) into a computer executable form.

The computer program may be fixed in any form (*e.g.,* source code form, computer executable form, or an intermediate form) either permanently or transitorily in a tangible storage medium, such as a semiconductor memory device (*e.g.,* a RAM, ROM, PROM, EEPROM, or Flash-Programmable RAM), a magnetic memory device (e.g., a diskette or fixed disk), an optical memory device (*e.g.,* a CD-ROM), a PC card (*e.g.,* PCMCIA card), or other memory device. The computer program may be fixed in any form in a signal that is transmittable to a computer using any of various communication technologies, including, but in no way limited to, analog technologies, digital technologies, optical technologies, wireless technologies, networking technologies, and internetworking technologies. The computer program may be distributed in any form as a removable storage medium with accompanying printed or electronic documentation (*e.g.,* shrink wrapped software), preloaded with a computer system *(e.g.,* on system ROM or fixed disk), or distributed from a server or electronic bulletin board over the communication system (*e.g.,* the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (*e.g.,* VHDL or AHDL), or a PLD programming language *(e.g.,* PALASM, ABEL, or CUPL).

Programmable logic may be fixed either permanently or transitorily in at least one tangible storage medium, such as a semiconductor memory device (*e.g.,* a RAM, ROM, PROM, EEPROM, or Flash-Programmable RAM), a magnetic memory device (e.g., a diskette or fixed disk), an optical memory device (*e.g.,* a CD-ROM), or other memory device. The programmable logic may be fixed in a signal that is transmittable to a computer using any of various communication technologies, including, but in no way limited to, analog technologies, digital technologies, optical technologies, wireless technologies (*e.g.,* Bluetooth), networking technologies, and internetworking technologies. The programmable logic may be distributed as a removable storage medium with accompanying printed or electronic documentation (*e.g.,* shrink wrapped software), preloaded with a computer system (*e.g.,* on system ROM or fixed disk), or distributed from a server or electronic bulletin board over the communication system (*e.g.,* the Internet or World Wide Web). Of course, some embodiments of the invention may be implemented as a combination of both software (*e.g.,* a computer program product) and hardware. Still other embodiments of the invention are implemented as entirely hardware, or entirely software.

The embodiments of the invention described above are intended to be merely exemplary; numerous variations and modifications will be apparent to those skilled in the art, within the scope of the present invention as defined in any appended claims.

**Claims**

1. A computer-implemented method for calibrating at least one camera (102, 104, 106), the system including at least one camera (102, 104, 106), the method comprising:

displaying (202) a video feed (400) from the at least one camera, the at least one camera (102, 104, 106) having an orientation **characterized by** pan, zoom, and tilt values, wherein the video feed (400) has upper left, upper right, lower left and lower right corners;

displaying (204) a map (300) of an area, the map (300) being **characterized by** geospatial coordinates;

allowing (206) a user to select at least three pairs of points using at least one input device, a first point of the pair being selected in the map (300) and a second point of the pair being selected from the video feed (400), the first point and the second point corresponding to the same geographic location;

converting (208), in a computer process, the at least three points selected in the map (300) from geospatial coordinates into Cartesian coordinates in three dimensions defined by a first three-dimensional coordinate system;

converting (210), in a computer process, the at least three points selected in the video feed (400) from effective pan and tilt coordinates into Cartesian coordinates in three dimensions defined by a second three-dimensional coordinate system, wherein effective pan angle corresponds to pan for the camera orientation plus a fraction of a horizontal field of view determined by zoom of the camera and effective tilt angle corresponds to tilt for the camera orientation plus a fraction of a vertical field of view determined by zoom of the camera;

determining (212), in a computer process, a mathematical rotation between the first three-dimensional coordinate system and the second three-dimensional coordinate system based upon the Cartesian coordinates for the at least three pairs of points;

determining (1204), in a computer process, effective pan and tilt angles for at least the lower left and lower right corners of the video feed (400);

converting (1206), in a computer process, the effective pan and tilt angles for at least the lower left and lower right corners of the video feed (400) into Cartesian coordinates in three dimensions defined by the second three-dimensional coordinate system;

applying (1208), in a computer process, the rotation to the Cartesian coordinates defined by the second coordinate system to determine Cartesian coordinates in three dimensions defined by the first coordinate system for at least the lower left and lower right corners of the video feed (400);

determining (1210), in a computer process, a view cone using the Cartesian coordinates defined by the first coordinate system for at least the lower left and lower right corners of the video feed (400) and based upon the upper left and upper right corners of the video feed (400); and

displaying (1212) the view cone on the map (300),

wherein the Cartesian coordinate systems are centered on the position of the camera and the geospatial location of the camera is known.

2. A method according to claim 1, wherein, when the tilt coordinate for the camera is below the horizon, determining the view cone based upon the upper left and upper right corners of the video feed (400) comprises:

determining, in a computer process, effective pan for the upper left and upper right corners of the video feed (400) based upon the pan, zoom, and tilt coordinates for the camera orientation; and

converting, in a computer process, the effective pan and tilt angles for the upper left and upper right corners of the video feed (400) into Cartesian coordinates in three dimensions defined by the second three-dimensional coordinate system;

applying, in a computer process, the mathematical rotation to the Cartesian coordinates to determine Cartesian coordinates in three dimensions defined by the first three-dimensional coordinate system for the upper left and upper right corners of the video feed (400); and

determining, in a computer process, the view cone based upon the Cartesian coordinates, defined by the first three-dimensional coordinate system,

for the upper left, upper right, lower left and lower right corners particularly wherein the view cone is a polygon and the Cartesian coordinates, defined by the first three-dimensional coordinate system, for the upper left, upper right, lower left and lower right corners are the vertices of the polygon.

3. A method according to claim 1, wherein, when the tilt coordinate for the camera is above the horizon, determining the view cone based upon the upper left and upper right corners of the video feed (400) comprises:

determining, in a computer process, effective tilt angles for the upper left and upper right corners of the video feed (400) based upon the pan, zoom, and tilt coordinates for the camera.

determining, in a computer process, coordinates in three dimensions, defined by the first three-dimensional coordinate system, for the upper left and upper right corners of the video feed (400) based upon a resolvable distance of the camera; and

determining, in a computer process, the view cone based upon the Cartesian coordinates, defined by the first three-dimensional coordinate system, for the upper left, upper right, lower left and lower right corners;

particularly wherein the view cone is a polygon and the Cartesian coordinates, defined by the first three-dimensional coordinate system, for the upper left, upper right, lower left and lower right corners are the vertices of the polygon.

4. A method according to claim 1,

wherein the mathematical rotation is a matrix;
wherein the method further comprises displaying the location of the at least one camera (302) on the map (300);
wherein the geospatial coordinates are latitude, longitude, and altitude coordinates; or
wherein the input device (114) is at least one of a mouse, a cursor, a crosshair, a touch screen, and a keyboard.

5. A method according to claim 1, further comprising:

receiving coordinates from a sensor (118) for at least one target;
if the coordinates for the at least one target are not Cartesian coordinates defined by the first three-dimensional coordinate system, converting, in a computer process, the coordinates into Cartesian coordinates in three dimensions defined by the first three-dimensional coordinate system;
applying, in a computer process, the rotation to the Cartesian coordinates defined by the first three-dimensional coordinate system to determine Cartesian coordinates in three dimensions defined by the second three-dimensional coordinate system;
converting, in a computer process, the Cartesian coordinates defined by the second three-dimensional coordinate system into pan and tilt coordinates; and

providing orientation instructions to the at least one camera based upon the pan and tilt coordinates.

6. A method according to claim 5, further comprising:

displaying the location of the at least one sensor (118) on the map (300); or
displaying the location of the at least one target on the map (300).

7. Apparatus comprising at least one non-transitory computer readable medium encoded with instructions which when loaded on at least one computer, establish processes for calibrating at least one camera orientation **characterized by** pan, zoom, and tilt values, the processes including:

allowing (206) a user to select at least three pairs of points using at least one input device (114), a first point of the pair being selected in a map (300) **characterized by** geospatial coordinates and a second point of the pair being selected from a video feed (400) from the at least one camera (102, 104, 106), the first point and the second point corresponding to the same geographic location, wherein the video feed (400) has upper left, upper right, lower left and lower right corners;
converting (208) the at least three points selected in the map (300) from geospatial coordinates into Cartesian coordinates in three dimensions defined by a first three-dimensional coordinate system;
converting (210) the at least three points selected in the video feed (400) from effective pan and tilt coordinates into Cartesian coordinates in three dimensions defined by a second three-dimensional coordinate system, wherein effective pan angle corresponds to pan for the camera orientation plus a fraction of a horizontal field of view determined by zoom of the camera and effective tilt angle corresponds to tilt for the camera orientation plus a fraction of a vertical field of view determined by zoom of the camera; and

determining (212) a mathematical rotation between the first three-dimensional coordinate system and the second three-dimensional coordinate system based upon the Cartesian coordinates for the at least three pairs of points;

determining effective pan and tilt angles for at least the lower left and lower right corners of the video feed (400);

converting the effective pan and tilt angles for at least the lower left and lower right corners of the video feed (400) into Cartesian coordinates defined by the second three-dimensional coordinate system;

applying the rotation to the Cartesian coordinates defined by the second three-dimensional coordinate system to determine Cartesian coordinates defined by the first three-dimensional coordinate system for at least the lower left and lower right corners of the video feed (400);

determining a view cone using the Cartesian coordinates defined by the first three-dimensional coordinate system for at least the lower left and lower right corners of the video feed (400) and based upon the upper left and upper right corners of the video feed (400); and

displaying the view cone on the map (300),

wherein the Cartesian coordinate systems are centered on the position of the camera and the geospatial location of the camera is known.

8. An apparatus according to claim 7, wherein the instructions establish processes further including:

converting the geospatial coordinates for a selected point into Cartesian coordinates defined by the first three-dimensional coordinate system;

applying the rotation to the Cartesian coordinates for the selected point to determine Cartesian coordinates defined by the second three-dimensional coordinate system;

converting the Cartesian coordinates defined by the second three-dimensional coordinate system into pan and tilt coordinates for the selected point; and

providing orientation instructions to the at least one camera based upon the pan and tilt coordinates for the selected point.

9. An apparatus according to claim 7, wherein the instructions establish processes further including:

receiving coordinates from a sensor (118) for at least one target;

if the coordinates for the at least one target are not Cartesian coordinates defined by the first three-dimensional coordinate system, converting the coordinates into Cartesian coordinates defined by the first three-dimensional coordinate system;

applying the rotation to the Cartesian coordinates defined by the first three-dimensional coordinate system to determine Cartesian coordinates defined by the second three-dimensional coordinate system;

converting the Cartesian coordinates defined by the second three-dimensional coordinate system into pan and tilt coordinates; and

providing orientation instructions to the at least one camera based upon the pan and tilt coordinates.

10. A surveillance system (100) comprising:

at least one camera (102, 104, 106) having an orientation **characterized by** pan, zoom and tilt values;

a processor (108) in communication with the at least one camera (102, 104, 106);

at least one display (112) in communication with the processor (108), the at least one display (112) displaying a video feed (400) from the at least one camera and a map (300) of an area, the map (300) being **characterized by** geospatial coordinates, wherein the video feed (400) has upper left, upper right lower left and lower right corners and wherein a view cone representative of the corners is displayed on the map;

at least one input device (114) in communication with the processor (108) allowing (206) a user to select points on the video feed (400) and the map (300);

a memory storing instructions executable by the processor (108) to perform processes that include:

converting (208) points selected in the map (300) from the geospatial coordinates into Cartesian coordinates in three dimensions defined by a first three-dimensional coordinate system;

converting (210) points selected in the video feed (400) from effective pan, zoom, and tilt coordinates into Cartesian coordinates in three dimensions defined by a second three-dimensional coordinate system, wherein effective pan angle corresponds to pan for the camera orientation plus a fraction of a horizontal field of view determined by zoom of the camera and effective tilt angle corresponds to tilt for the camera orientation plus a

fraction of a vertical field of view determined by zoom of the camera; and determining (212) a mathematical rotation between the first three-dimensional coordinate system and the second three-dimensional coordinate system based upon the Cartesian coordinates for at least three pairs of points, a first point of the pair having been selected in the map (300) and a second point of the pair having been selected from the video feed (400); determining effective pan and tilt angles for at least the lower left and lower right corners of the video feed (400); converting the effective pan and tilt angles for at least the lower left and lower right corners of the video feed (400) into Cartesian coordinates defined by the second three-dimensional coordinate system;

applying the rotation to the Cartesian coordinates defined by the second three-dimensional coordinate system to determine Cartesian coordinates defined by the first three-dimensional coordinate system for at least the lower left and lower right corners of the video feed (400);

determining the view cone using the Cartesian coordinates defined by the first three-dimensional coordinate system for at least the lower left and lower right corners of the video feed (400) and based upon the upper left and upper right corners of the video feed (400),

wherein the Cartesian coordinate systems are centered on the position of the camera and the geospatial location of the camera is known.

11. The surveillance system (100) of claim 10,

wherein the mathematical rotation is a matrix;
wherein the geospatial coordinates are latitude, longitude, and altitude coordinates;
wherein the at least one input device is at least one of a mouse, a cursor, a crosshair, a touch screen, and a keyboard; or
wherein the system further comprises a sensor (118) connected to provide coordinates to the processor (108).

12. The surveillance system (100) of claim 10, wherein the memory further stores instructions executable by the processor (108) to perform processes that include:

applying the mathematical rotation to the Cartesian coordinates defined by the first three-dimensional coordinate system for a point selected by the user in the map (300) to determine Cartesian coordinates defined by the second three-dimensional coordinate system;
converting the Cartesian coordinates defined by the second three-dimensional_coordinate system into pan and tilt coordinates for the selected point; and
providing orientation instructions to the at least one camera based upon the pan and tilt coordinates for the selected point.

## Patentansprüche

1. Computerimplementiertes Verfahren zum Kalibrieren wenigstens einer Kamera (102, 104, 106), wobei das System wenigstens eine Kamera (102, 104, 106) aufweist und das Verfahren die Schritte umfasst:

Anzeigen (202) eines Videobildes (400) der wenigstens einen Kamera, wobei die wenigstens eine Kamera (102, 104, 106) eine Ausrichtung aufweist, die durch Schwenk-, Zoom- und Neigungswerte gekennzeichnet ist, wobei das Videobild (400) eine obere linke, obere rechte, untere linke und untere rechte Ecke aufweist;
Anzeigen (204) einer Karte (300) eines Gebietes, wobei die Karte (300) durch Geokoordinaten gekennzeichnet ist;
Ermöglichen (206), dass ein Benutzer wenigstens drei Paare von Punkten mittels wenigstens einer Eingabevorrichtung auswählt, wobei ein erster Punkt des Paares in der Karte (300) und ein zweiter Punkt des Paares aus dem Videobild (400) ausgewählt wird, wobei der erste Punkt und der zweite Punkt dem gleichen geographischen Standort entsprechen;
Umwandeln (208) der wenigstens drei in der Karte (300) ausgewählten Punkte in einem Computerprozess von Geodaten in kartesische Koordinaten in drei Dimensionen, die durch ein erstes dreidimensionales Koordinatensystem definiert sind;
Umwandeln (210) der wenigstens drei Punkte, die in dem Videobild (400) ausgewählt sind, in einem Computerprozess von effektiven Schwenk- und Neigungskoordinaten in kartesische Koordinaten in drei Dimensionen, die durch ein zweites dreidimensionales Koordinatensystem definiert sind, wobei der effektive Schwenkwinkel dem Schwenken für die Kameraausrichtung plus einem Bruchteil eines horizontalen Sichtfeldes entspricht, das durch das Zoomen der Kamera bestimmt wird, und der effektive Neigungswinkel der Neigung für die Kameraausrichtung plus einem Bruchteil eines vertikalen Sichtfeldes entspricht, das durch das Zoomen der Kamera bestimmt wird;

Bestimmen (212) einer mathematischen Drehung zwischen dem ersten dreidimensionalen Koordinatensystem und dem zweiten dreidimensionalen Koordinatensystem in einem Computerprozess auf Basis der kartesischen Koordinaten für die wenigstens drei Paare von Punkten;

Bestimmen (1204) effektiver Schwenk- und Neigungswinkel für wenigstens die untere linke und die untere rechte Ecke des Videobildes (400) in einem Computerprozess;

Umwandeln (1206) der effektiven Schwenk- und Neigungswinkel für wenigstens die unteren linke und die untere rechte Ecke des Videobildes (400) in kartesische Koordinaten in drei Dimensionen, die durch das zweite dreidimensionale Koordinatensystem definiert sind, in einem Computerprozess; Anwenden (1208) der Drehung auf die durch das zweite Koordinatensystem definierten kartesischen Koordinaten in einem Computerprozess, um kartesische Koordinaten in drei Dimensionen zu bestimmen, die durch das erste Koordinatensystem für wenigstens die untere linke und untere rechte Ecke des Videobildes (400) definiert sind;

Bestimmen (1210) eines Betrachtungskegels in einem Computerprozess mittels der kartesischen Koordinaten, die durch das erste Koordinatensystem für wenigstens die untere linke und die untere rechte Ecke des Videobildes (400) definiert sind, und auf Basis der oberen linken und oberen rechten Ecke des Videobildes (400), und Anzeigen (1212) des Betrachtungskegels auf der Karte (300), wobei die kartesischen Koordinatensysteme auf die Position der Kamera zentriert sind und die geographische Position der Kamera bekannt ist.

2. Verfahren nach Anspruch 1, wobei, wenn sich die Neigungskoordinate für die Kamera unterhalb des Horizonts befindet, das Bestimmen des Betrachtungskegels auf Basis der oberen linken und der oberen rechten Ecke des Videobildes (400) die Schritte umfasst:

Bestimmen eines effektiven Schwenks für die obere linke und obere rechte Ecke des Videobildes (400) in einem Computerprozess auf Basis der Schwenk-, Zoom- und Neigungskoordinaten für die Kameraausrichtung, und Umwandeln der effektiven Schwenk- und Neigungswinkel für die obere linke und obere rechte Ecke des Videobildes (400) in kartesische Koordinaten in drei Dimensionen, die durch das zweite dreidimensionale Koordinatensystem definiert sind, in einem Computerprozess;

Anwenden der mathematischen Drehung auf die kartesischen Koordinaten in einem Computerprozess, um kartesische Koordinaten in drei Dimensionen zu bestimmen, die durch das erste dreidimensionale Koordinatensystem für die obere linke und die obere rechte Ecke des Videobildes (400) definiert sind, und

Bestimmen des Betrachtungskegels auf Basis der kartesischen Koordinaten, die durch das erste dreidimensionale Koordinatensystem definiert sind, für die obere linke, obere rechte, untere linke und untere rechte Ecke, insbesondere wobei der Betrachtungskegel ein Polygon ist und die kartesischen Koordinaten, die durch das erste dreidimensionale Koordinatensystem definiert sind, für die obere linke, obere rechte, untere linke und untere rechte Ecke die Eckpunkte des Polygons sind.

3. Verfahren nach Anspruch 1, wobei, wenn sich die Neigungskoordinate für die Kamera über dem Horizont befindet, das Bestimmen des Betrachtungskegels auf Basis der oberen linken und der oberen rechten Ecke des Videobildes (400) umfasst:

Bestimmen effektiver Neigungswinkel für die obere linke und die obere rechte Ecke des Videobildes (400) auf Basis der Schwenk-, Zoom- und Neigungskoordinaten für die Kamera in einem Computerprozess,

Bestimmen von Koordinaten in drei Dimensionen, die durch das erste dreidimensionale Koordinatensystem definiert sind, für die obere linke und die obere rechte Ecke des Videobildes (400) in einem Computerprozess auf Basis einem auflösbaren Abstand der Kamera, und

Bestimmen des Betrachtungskegels in einem Computerprozess auf Basis der kartesischen Koordinaten, die durch das erste dreidimensionale Koordinatensystem definiert sind, für die obere linke, obere rechte, untere linke und untere rechte Ecke;

insbesondere wobei der Betrachtungskegel ein Polygon ist und die kartesischen Koordinaten, die durch das erste dreidimensionale Koordinatensystem definiert sind, für die obere linke, obere rechte, untere linke und untere rechte Ecke die Eckpunkte des Polygons sind.

4. Verfahren nach Anspruch 1, wobei die mathematische Drehung eine Matrix ist;

wobei das Verfahren ferner das Anzeigen der Position der wenigstens einen Kamera (302) auf der Karte (300) umfasst;

wobei die Geokoordinaten Breitengrad, Längengrad und Höhenkoordinaten sind, oder

wobei die Eingabevorrichtung (114) wenigstens eine der Vorrichtungen Maus, Cursor, Fadenkreuz, Touchscreen und Tastatur ist.

5. Verfahren nach Anspruch 1, ferner umfassend die Schritte:

Empfangen von Koordinaten von einem Sensor (118) für wenigstens ein Ziel;
wenn die Koordinaten für das wenigstens eine Ziel keine kartesischen Koordinaten sind, die durch das erste dreidimensionale Koordinatensystem definiert sind, Umwandeln der Koordinaten in einem Computerprozess in kartesische Koordinaten in drei Dimensionen, die durch das erste dreidimensionale Koordinatensystem definiert sind;
Anwenden der Drehung auf die durch das erste dreidimensionale Koordinatensystem definierten kartesischen Koordinaten in einem Computerprozess, um kartesische Koordinaten in drei Dimensionen zu bestimmen, die durch das zweite dreidimensionale Koordinatensystem definiert sind;
Umwandeln der durch das zweite dreidimensionale Koordinatensystem definierten kartesischen Koordinaten in Schwenk- und Neigungskoordinaten in einem Computerprozess, und Bereitstellen von Ausrichtungsanweisungen für die wenigstens eine Kamera auf Basis der Schwenk- und Neigungskoordinaten.

6. Verfahren nach Anspruch 5, ferner umfassend die Schritte:

Anzeigen der Position des wenigstens einen Sensors (118) auf der Karte (300) oder
Anzeigen der Position des wenigstens einen Ziels auf der Karte (300).

7. Vorrichtung mit wenigstens einem nichtflüchtigen, computerlesbaren Medium, das mit Anweisungen kodiert ist, die, wenn sie auf wenigstens einem Computer geladen werden, Prozesse zum Kalibrieren wenigstens einer Kameraausrichtung festlegen, die durch Schwenk-, Zoom- und Neigungswerte gekennzeichnet ist, wobei die Prozesse Folgendes umfassen:

Ermöglichen (206), dass ein Benutzer wenigstens drei Paare von Punkten mittels wenigstens einer Eingabevorrichtung (114) auswählt, wobei ein erster Punkt des Paares in einer Karte (300) ausgewählt wird, die durch Geokoordinaten gekennzeichnet ist, und ein zweiter Punkt des Paares aus einem Videobild (400) der wenigstens einen Kamera (102, 104, 106) ausgewählt wird, wobei der erste Punkt und der zweite Punkt dem gleichen geographischen Standort entsprechen, wobei das Videobild (400) eine obere linke, obere rechte, untere linke und untere rechte Ecke aufweist;
Umwandeln (208) der wenigstens drei in der Karte (300) ausgewählten Punkte von Geodäten in kartesische Koordinaten in drei Dimensionen, die durch ein erstes dreidimensionales Koordinatensystem definiert sind;
Umwandeln (210) der wenigstens drei Punkte, die in dem Videobild (400) ausgewählt sind, von effektiven Schwenk- und Neigungskoordinaten in kartesische Koordinaten in drei Dimensionen, die durch ein zweites dreidimensionales Koordinatensystem definiert sind, wobei der effektive Schwenkwinkel dem Schwenken für die Kameraausrichtung plus einem Bruchteil eines horizontalen Sichtfeldes entspricht, das durch das Zoomen der Kamera bestimmt wird, und der effektive Neigungswinkel dem Schwenken für die Kameraausrichtung plus einem Bruchteil eines vertikalen Sichtfeldes entspricht, das durch das Zoomen der Kamera bestimmt wird, und
Bestimmen (212) einer mathematischen Drehung zwischen dem ersten dreidimensionalen Koordinatensystem und dem zweiten dreidimensionalen Koordinatensystem auf Basis der kartesischen Koordinaten für die wenigstens drei Paare von Punkten;
Bestimmen effektiver Schwenk- und Neigungswinkel für wenigstens die untere linke und die untere rechte Ecke des Videobildes (400);
Umwandeln der effektiven Schwenk- und Neigungswinkel für wenigstens die untere linke und die untere rechte Ecke des Videobildes (400) in kartesische Koordinaten, die durch das zweite dreidimensionale Koordinatensystem definiert sind;
Anwenden der Drehung auf die durch das zweite dreidimensionale Koordinatensystem definierten kartesischen Koordinaten, um kartesische Koordinaten zu bestimmen, die durch das erste dreidimensionale Koordinatensystem für wenigstens die untere linke und die untere rechte Ecke des Videobildes (400) definiert sind;
Bestimmen eines Betrachtungskegels mittels der kartesischen Koordinaten, die durch das erste dreidimensionale Koordinatensystem für wenigstens die untere linke und die untere rechte Ecke des Videobildes (400) definiert sind, und auf Basis der oberen linken und der oberen rechten Ecke des Videobildes (400), und
Anzeigen des Betrachtungskegels auf der Karte (300),
wobei die kartesischen Koordinatensysteme auf die Position der Kamera zentriert sind und die geographische Lage der Kamera bekannt ist.

8. Vorrichtung nach Anspruch 7, wobei die Anweisungen Prozesse etablieren, die ferner Folgendes beinhalten:

Umwandeln der Geokoordinaten für einen ausgewählten Punkt in kartesische Koordinaten, die durch das erste dreidimensionale Koordinatensystem definiert sind;
Anwenden der Drehung auf die kartesischen Koordinaten für den ausgewählten Punkt, um kartesische Koordinaten zu bestimmen, die durch das zweite dreidimensionale Koordinatensystem definiert sind;
Umwandeln der durch das zweite dreidimensionale Koordinatensystem definierten kartesischen Koordinaten in Schwenk- und Neigungskoordinaten für den ausgewählten Punkt, und
Bereitstellen von Ausrichtungsanweisungen für die wenigstens eine Kamera auf Basis der Schwenk- und Neigungskoordinaten für den ausgewählten Punkt.

9. Vorrichtung nach Anspruch 7, wobei die Anweisungen Prozesse etablieren, die ferner Folgendes beinhalten:

Empfangen von Koordinaten von einem Sensor (118) für wenigstens ein Ziel;
wenn die Koordinaten für das wenigstens eine Ziel keine kartesischen Koordinaten sind, die durch das erste dreidimensionale Koordinatensystem definiert sind, Umwandeln der Koordinaten in kartesische Koordinaten, die durch das erste dreidimensionale Koordinatensystem definiert sind;
Anwenden der Drehung auf die durch das erste dreidimensionale Koordinatensystem definierten kartesischen Koordinaten, um die durch das zweite dreidimensionale Koordinatensystem definierten kartesischen Koordinaten zu bestimmen;
Umwandeln der durch das zweite dreidimensionale Koordinatensystem definierten kartesischen Koordinaten in Schwenk- und Neigungskoordinaten, und
Bereitstellen von Ausrichtungsanweisungen für die wenigstens eine Kamera auf Basis der Schwenk- und Neigungskoordinaten.

10. Überwachungssystem (100), umfassend:

wenigstens eine Kamera (102, 104, 106) mit einer Ausrichtung, die durch Schwenk-, Zoom- und Neigungswerte gekennzeichnet ist;
einen Prozessor (108) in Verbindung mit der wenigstens einen Kamera (102, 104, 106);
wenigstens eine Anzeige (112) in Verbindung mit dem Prozessor (108), wobei die wenigstens eine Anzeige (112) ein Videobild (400) der wenigstens einen Kamera und eine Karte (300) eines Bereichs anzeigt, wobei die Karte (300) durch Geokoordinaten gekennzeichnet ist, wobei das Videobild (400) eine obere linke, obere rechte, untere linke und untere rechte Ecke aufweist und wobei ein für die Ecken repräsentativer Betrachtungskegel auf der Karte angezeigt wird;
wenigstens eine Eingabevorrichtung (114) in Verbindung mit dem Prozessor (108), die es einem Benutzer ermöglicht (206), Punkte auf dem Videobild (400) und der Karte (300) auszuwählen;
einen Speicher, der Anweisungen speichert, die von dem Prozessor (108) ausführbar sind, um Prozesse auszuführen, die Folgendes beinhalten:

Umwandeln (208) von in der Karte (300) ausgewählten Punkten von den Geokoordinaten in kartesische Koordinaten in drei Dimensionen, die durch ein erstes dreidimensionales Koordinatensystem definiert sind;
Umwandeln (210) von Punkten, die in dem Videobild (400) ausgewählt sind, von effektiven Schwenk-, Zoom- und Neigungskoordinaten in kartesische Koordinaten in drei Dimensionen, die durch ein zweites dreidimensionales Koordinatensystem definiert sind, wobei der effektive Schwenkwinkel dem Schwenken für die Kameraausrichtung plus einem Bruchteil eines horizontalen Sichtfeldes entspricht, das durch das Zoomen der Kamera bestimmt wird, und der effektive Neigungswinkel der Neigung für die Kameraausrichtung plus einem Bruchteil eines vertikalen Sichtfeldes entspricht, das durch das Zoomen der Kamera bestimmt wird, und
Bestimmen (212) einer mathematischen Drehung zwischen dem ersten dreidimensionalen Koordinatensystem und dem zweiten dreidimensionalen Koordinatensystem auf Basis der kartesischen Koordinaten für wenigstens drei Punktpaare, wobei ein erster Punkt des Paares in der Karte (300) ausgewählt wurde und ein zweiter Punkt des Paares aus dem Videobild (400) ausgewählt wurde;
Bestimmen effektiver Schwenk- und Neigungswinkel für wenigstens die untere linke und die untere rechte Ecke des Videobildes (400);
Umwandeln der effektiven Schwenk- und Neigungswinkel für wenigstens die untere linke und die untere rechte Ecke des Videobildes (400) in kartesische Koordinaten, die durch das zweite dreidimensionale Koordinatensystem definiert sind;

Anwenden der Drehung auf die durch das zweite dreidimensionale Koordinatensystem definierten kartesischen Koordinaten, um kartesische Koordinaten zu bestimmen, die durch das erste dreidimensionale Koordinatensystem für wenigstens die untere linke und die untere rechte Ecke des Videobildes (400) definiert sind;

Bestimmen des Betrachtungskegels mittels der kartesischen Koordinaten, die durch das erste dreidimensionale Koordinatensystem für wenigstens die untere linke und die untere rechte Ecke des Videobildes (400) definiert sind, und auf Basis der oberen linken und der oberen rechten Ecke des Videobildes (400), wobei die kartesischen Koordinatensysteme auf die Position der Kamera zentriert sind und die geographische Lage der Kamera bekannt ist.

11. Überwachungssystem (100) nach Anspruch 10, wobei die mathematische Drehung eine Matrix ist;

wobei die Geokoordinaten Breitengrad, Längengrad und Höhenkoordinaten sind;

wobei die wenigstens eine Eingabevorrichtung wenigstens eine der Vorrichtungen Maus, Cursor, Fadenkreuz, Touchscreen und Tastatur ist, oder wobei das System ferner einen Sensor (118) umfasst, der verbunden ist, um Koordinaten an den Prozessor (108) bereitzustellen.

12. Überwachungssystem (100) nach Anspruch 10, wobei der Speicher ferner Anweisungen speichert, die von dem Prozessor (108) ausführbar sind, um Prozesse auszuführen, die Folgendes beinhalten:

Anwenden der mathematischen Drehung auf die durch das erste dreidimensionale Koordinatensystem definierten kartesischen Koordinaten für einen vom Benutzer in der Karte (300) ausgewählten Punkt, um kartesische Koordinaten zu bestimmen, die durch das zweite dreidimensionale Koordinatensystem definiert sind;

Umwandeln der durch das zweite dreidimensionale Koordinatensystem definierten kartesischen Koordinaten in Schwenk- und Neigungskoordinaten für den ausgewählten Punkt, und

Bereitstellen von Ausrichtungsanweisungen für die wenigstens eine Kamera auf Basis der Schwenk- und Neigungskoordinaten für den ausgewählten Punkt.

**Revendications**

1. Procédé implémenté par ordinateur pour étalonner au moins une caméra (102, 104, 106), le système incluant au moins une caméra (102, 104, 106), le procédé comprenant :

l'affichage (202) d'une entrée vidéo (400) provenant de l'au moins une caméra, l'au moins une caméra (102, 104, 106) ayant une orientation **caractérisée par** des valeurs de pivotement horizontal, de zoom, et d'inclinaison verticale, dans lequel l'entrée vidéo (400) a des coins supérieur gauche, supérieur droit, inférieur gauche et inférieur droit ;

l'affichage (204) d'une carte (300) d'une zone, la carte (300) étant **caractérisée par** des coordonnées géospatiales ;

l'autorisation (206) à un utilisateur de sélectionner au moins trois paires de points à l'aide d'au moins un dispositif de saisie, un premier point de la paire étant sélectionné dans la carte (300) et un second point de la paire étant sélectionné à partir de l'entrée vidéo (400), le premier point et le second point correspondant au même emplacement géographique ;

la conversion (208), dans un processus d'ordinateur, des au moins trois points sélectionnés dans la carte (300) de coordonnées géospatiales en coordonnées cartésiennes en trois dimensions définies par un premier système de coordonnées tridimensionnelles ;

la conversion (210), dans un processus d'ordinateur, des au moins trois points sélectionnés dans l'entrée vidéo (400) de coordonnées de pivotement horizontal et d'inclinaison verticale efficaces en coordonnées cartésiennes en trois dimensions définies par un second système de coordonnées tridimensionnelles, dans lequel un angle de pivotement horizontal efficace correspond à un pivotement horizontal pour l'orientation de la caméra plus une fraction d'un champ de vision horizontal déterminé par un zoom de la caméra et un angle d'inclinaison verticale efficace correspond à une inclinaison verticale pour l'orientation de la caméra plus une fraction d'un champ de vision vertical déterminé par un zoom de la caméra ;

la détermination (212), dans un processus d'ordinateur, d'une rotation mathématique entre le premier système de coordonnées tridimensionnelles et le second système de coordonnées tridimensionnelles d'après les coordonnées cartésiennes pour les au moins trois paires de points ;

la détermination (1204), dans un processus d'ordinateur, d'angles de pivotement horizontal et d'inclinaison verticale efficaces pour au moins les coins inférieur gauche et inférieur droit de l'entrée vidéo (400) ;

la conversion (1206), dans un processus d'ordinateur, des angles de pivotement horizontal et d'inclinaison verticale efficaces pour au moins les coins inférieur gauche et inférieur droit de l'entrée vidéo (400) en coordonnées cartésiennes en trois dimensions définies par le second système de coordonnées tridimensionnelles ; l'application (1208), dans un processus d'ordinateur, de la rotation des coordonnées cartésiennes définies par le second système de coordonnées pour déterminer des coordonnées cartésiennes en trois dimensions définies par le premier système de coordonnées pour au moins les coins inférieur gauche et inférieur droit de l'entrée vidéo (400) ;

la détermination (1210), dans un processus d'ordinateur, d'un cône de vision à l'aide des coordonnées cartésiennes définies par le premier système de coordonnées pour au moins les coins inférieur gauche et inférieur droit de l'entrée vidéo (400)

et d'après les coins supérieur gauche et supérieur droit de l'entrée vidéo (400) ; et

l'affichage (1212) du cône de vision sur la carte (300),

dans lequel les systèmes de coordonnées cartésiennes sont centrés sur la position de la caméra et l'emplacement géospatial de la caméra est connu.

2. Procédé selon la revendication 1, dans lequel, lorsque la coordonnée d'inclinaison verticale pour la caméra est en dessous de l'horizon, la détermination du cône de vision d'après les coins supérieur gauche et supérieur droit de l'entrée vidéo (400) comprend :

la détermination, dans un processus d'ordinateur, d'un pivotement horizontal efficace pour les coins supérieur gauche et supérieur droit de l'entrée vidéo (400) d'après les coordonnées de pivotement horizontal, de zoom, et d'inclinaison verticale pour l'orientation de la caméra ; et

la conversion, dans un processus d'ordinateur, des angles de pivotement horizontal et d'inclinaison verticale efficaces pour les coins supérieur gauche et supérieur droit de l'entrée vidéo (400) en coordonnées cartésiennes en trois dimensions définies par le second système de coordonnées tridimensionnelles ;

l'application, dans un processus d'ordinateur, de la rotation mathématique aux coordonnées cartésiennes pour déterminer des coordonnées cartésiennes en trois dimensions définies par le premier système de coordonnées tridimensionnelles pour les coins supérieur gauche et supérieur droit de l'entrée vidéo (400) ; et

la détermination, dans un processus d'ordinateur, du cône de vision d'après les coordonnées cartésiennes, définies par le premier système de coordonnées tridimensionnelles, pour les coins supérieur gauche, supérieur droit, inférieur gauche et inférieur droit

dans lequel notamment le cône de vision est un polygone et les coordonnées cartésiennes, définies par le premier système de coordonnées tridimensionnelles, pour les coins supérieur gauche, supérieur droit, inférieur gauche et inférieur droit sont les sommets du polygone.

3. Procédé selon la revendication 1, dans lequel, lorsque la coordonnée d'inclinaison verticale pour la caméra est au-dessus de l'horizon, la détermination du cône de vision d'après les coins supérieur gauche et supérieur droit de l'entrée vidéo (400) comprend :

la détermination, dans un processus d'ordinateur, d'angles d'inclinaison verticale efficaces pour les coins supérieur gauche et supérieur droit de l'entrée vidéo (400) d'après les coordonnées de pivotement horizontal, de zoom, et d'inclinaison verticale pour la caméra ;

la détermination, dans un processus d'ordinateur, de coordonnées en trois dimensions, définies par le premier système de coordonnées tridimensionnelles, pour les coins supérieur gauche et supérieur droit de l'entrée vidéo (400) d'après une distance résolvable de la caméra ; et

la détermination, dans un processus d'ordinateur, du cône de vision d'après les coordonnées cartésiennes, définies par le premier système de coordonnées tridimensionnelles, pour les coins supérieur gauche, supérieur droit, inférieur gauche et inférieur droit ;

notamment dans lequel le cône de vision est un polygone et les coordonnées cartésiennes, définies par le premier système de coordonnées tridimensionnelles, pour les coins supérieur gauche, supérieur droit, inférieur gauche et inférieur droit sont les sommets du polygone.

4. Procédé selon la revendication 1,
dans lequel la rotation mathématique est une matrice ;
dans lequel le procédé comprend en outre l'affichage de l'emplacement de l'au moins une caméra (302) sur la carte (300) ;
dans lequel les coordonnées géospatiales sont des coordonnées de latitude, de longitude, et d'altitude ; ou
dans lequel le dispositif de saisie (114) est au moins l'un parmi une souris, un curseur, un réticule, un écran tactile, et un clavier.

**5.** Procédé selon la revendication 1, comprenant en outre :

la réception de coordonnées en provenance d'un capteur (118) pour au moins une cible ;
si les coordonnées pour l'au moins une cible ne sont pas des coordonnées cartésiennes définies par le premier système de coordonnées tridimensionnelles, la conversion, dans un processus d'ordinateur, des coordonnées en coordonnées cartésiennes en trois dimensions définies par le premier système de coordonnées tridimensionnelles ;
l'application, dans un processus d'ordinateur, de la rotation aux coordonnées cartésiennes définies par le premier système de coordonnées tridimensionnelles pour déterminer des coordonnées cartésiennes en trois dimensions définies par le second système de coordonnées tridimensionnelles ;
la conversion, dans un processus d'ordinateur, des coordonnées cartésiennes définies par le second système de coordonnées tridimensionnelles en coordonnées de pivotement horizontal et d'inclinaison verticale ; et
la fourniture d'instructions d'orientation à l'au moins une caméra d'après les coordonnées de pivotement horizontal et d'inclinaison verticale.

**6.** Procédé selon la revendication 5, comprenant en outre :

l'affichage de l'emplacement de l'au moins un capteur (118) sur la carte (300) ; ou
l'affichage de l'emplacement de l'au moins une cible sur la carte (300).

**7.** Appareil comprenant au moins un support lisible par ordinateur non transitoire encodé avec des instructions qui lorsqu'elles sont chargées sur au moins un ordinateur, établissent des processus pour étalonner au moins une orientation de caméra **caractérisée par** des valeurs de pivotement horizontal, de zoom, et d'inclinaison verticale, les processus incluant :

l'autorisation (206) à un utilisateur de sélectionner au moins trois paires de points à l'aide d'au moins un dispositif de saisie (114), un premier point de la paire étant sélectionné dans une carte (300) **caractérisée par** des coordonnées géospatiales et un second point de la paire étant sélectionné à partir d'une entrée vidéo (400) provenant de l'au moins une caméra (102, 104, 106), le premier point et le second point correspondant au même emplacement géographique, dans lequel l'entrée vidéo (400) a des coins supérieur gauche, supérieur droit, inférieur gauche et inférieur droit ;
la conversion (208) des au moins trois points sélectionnés dans la carte (300) de coordonnées géospatiales en coordonnées cartésiennes en trois dimensions définies par un premier système de coordonnées tridimensionnelles ;
la conversion (210) des au moins trois points sélectionnés dans l'entrée vidéo (400) de coordonnées de pivotement horizontal et d'inclinaison verticale efficaces en coordonnées cartésiennes en trois dimensions définies par un second système de coordonnées tridimensionnelles, dans lequel un angle de pivotement horizontal efficace correspond à un pivotement horizontal pour l'orientation de la caméra plus une fraction d'un champ de vision horizontal déterminé par un zoom de la caméra et un angle d'inclinaison verticale efficace correspond à une inclinaison verticale pour l'orientation de la caméra plus une fraction d'un champ de vision vertical déterminé par un zoom de la caméra ; et
la détermination (212) d'une rotation mathématique entre le premier système de coordonnées tridimensionnelles et le second système de coordonnées tridimensionnelles d'après les coordonnées cartésiennes pour les au moins trois paires de points ;
la détermination d'angles de pivotement horizontal et d'inclinaison verticale efficaces pour au moins les coins inférieur gauche et inférieur droit de l'entrée vidéo (400) ;
la conversion des angles de pivotement horizontal et d'inclinaison verticale efficaces pour au moins les coins inférieur gauche et inférieur droit de l'entrée vidéo (400) en coordonnées cartésiennes définies par le second système de coordonnées tridimensionnelles ;
l'application de la rotation aux coordonnées cartésiennes définies par le second système de coordonnées tridimensionnelles pour déterminer des coordonnées cartésiennes définies par le premier système de coordonnées tridimensionnelles pour au moins les coins inférieur gauche et inférieur droit de l'entrée vidéo (400) ;
la détermination d'un cône de vision à l'aide des coordonnées cartésiennes définies par le premier système de coordonnées tridimensionnelles pour au moins les coins inférieur gauche et inférieur droit de l'entrée vidéo (400) et d'après les coins supérieur gauche et supérieur droit de l'entrée vidéo (400) ; et
l'affichage du cône de vision sur la carte (300),

dans lequel les systèmes de coordonnées cartésiennes sont centrés sur la position de la caméra et l'emplacement géospatial de la caméra est connu.

8. Appareil selon la revendication 7, dans lequel les instructions établissent des processus incluant en outre :

la conversion des coordonnées géospatiales pour un point sélectionné en coordonnées cartésiennes définies par le premier système de coordonnées tridimensionnelles ;
l'application de la rotation aux coordonnées cartésiennes pour le point sélectionné pour déterminer des coordonnées cartésiennes définies par le second système de coordonnées tridimensionnelles ;
la conversion des coordonnées cartésiennes définies par le second système de coordonnées tridimensionnelles en coordonnées de pivotement horizontal et d'inclinaison verticale pour le point sélectionné ; et
la fourniture d'instructions d'orientation à l'au moins une caméra d'après les coordonnées de pivotement horizontal et d'inclinaison verticale pour le point sélectionné.

9. Appareil selon la revendication 7, dans lequel les instructions établissent des processus incluant en outre :

la réception de coordonnées en provenance d'un capteur (118) pour au moins une cible ;
si les coordonnées pour l'au moins une cible ne sont pas des coordonnées cartésiennes définies par le premier système de coordonnées tridimensionnelles, la conversion des coordonnées en coordonnées cartésiennes définies par le premier système de coordonnées tridimensionnelles ;
l'application de la rotation aux coordonnées cartésiennes définies par le premier système de coordonnées tridimensionnelles pour déterminer des coordonnées cartésiennes définies par le second système de coordonnées tridimensionnelles ;
la conversion des coordonnées cartésiennes définies par le second système de coordonnées tridimensionnelles en coordonnées de pivotement horizontal et d'inclinaison verticale ; et
la fourniture d'instructions d'orientation à l'au moins une caméra d'après les coordonnées de pivotement horizontal et d'inclinaison verticale.

10. Système de surveillance (100) comprenant :

au moins une caméra (102, 104, 106) ayant une orientation **caractérisée par** des valeurs de pivotement horizontal, de zoom, et d'inclinaison verticale ;
un processeur (108) en communication avec l'au moins une caméra (102, 104, 106) ;
au moins un afficheur (112) en communication avec le processeur (108), l'au moins un afficheur (112) affichant une entrée vidéo (400) provenant de l'au moins une caméra et une carte (300) d'une zone, la carte (300) étant **caractérisée par** des coordonnées géospatiales, dans lequel l'entrée vidéo (400) a des coins supérieur gauche, supérieur droit, inférieur gauche et inférieur droit et dans lequel un cône de vision représentatif des coins est affiché sur la carte ;
au moins un dispositif de saisie (114) en communication avec le processeur (108) autorisant (206) un utilisateur à sélectionner des points sur l'entrée vidéo (400) et la carte (300) ;
une mémoire stockant des instructions exécutables par le processeur (108) pour réaliser des processus qui incluent :

la conversion (208) de points sélectionnés dans la carte (300) de coordonnées géospatiales en coordonnées cartésiennes en trois dimensions définies par un premier système de coordonnées tridimensionnelles ;
la conversion (210) de points sélectionnés dans l'entrée vidéo (400) de coordonnées de pivotement horizontal, de zoom, et d'inclinaison verticale efficaces en coordonnées cartésiennes en trois dimensions définies par un second système de coordonnées tridimensionnelles, dans lequel un angle de pivotement horizontal efficace correspond à un pivotement horizontal pour l'orientation de la caméra plus une fraction d'un champ de vision horizontal déterminé par le zoom de la caméra et un angle d'inclinaison verticale efficace correspond à une inclinaison verticale pour l'orientation de la caméra plus une fraction d'un champ de vision vertical déterminé par un zoom de la caméra ; et
la détermination (212) d'une rotation mathématique entre le premier système de coordonnées tridimensionnelles et le second système de coordonnées tridimensionnelles d'après les coordonnées cartésiennes pour au moins trois paires de points, un premier point de la paire ayant été sélectionné dans la carte (300) et un second point de la paire ayant été sélectionné à partir de l'entrée vidéo (400) ;
la détermination d'angles de pivotement horizontal et d'inclinaison verticale efficaces pour au moins les coins inférieur gauche et inférieur droit de l'entrée vidéo (400) ;

la conversion des angles de pivotement horizontal et d'inclinaison verticale efficaces pour au moins les coins inférieur gauche et inférieur droit de l'entrée vidéo (400) en coordonnées cartésiennes définies par le second système de coordonnées tridimensionnelles ;

l'application de la rotation aux coordonnées cartésiennes définies par le second système de coordonnées tridimensionnelles pour déterminer des coordonnées cartésiennes définies par le premier système de coordonnées tridimensionnelles pour au moins les coins inférieur gauche et inférieur droit de l'entrée vidéo (400) ;

la détermination du cône de vision à l'aide des coordonnées cartésiennes définies par le premier système de coordonnées tridimensionnelles pour au moins les coins inférieur gauche et inférieur droit de l'entrée vidéo (400) et d'après les coins supérieur gauche et supérieur droit de l'entrée vidéo (400),

dans lequel les systèmes de coordonnées cartésiennes sont centrés sur la position de la caméra et l'emplacement géospatial de la caméra est connu.

11. Système de surveillance (100) selon la revendication 10,

dans lequel la rotation mathématique est une matrice ;

dans lequel les coordonnées géospatiales sont des coordonnées de latitude, de longitude, et d'altitude ;

dans lequel l'au moins un dispositif de saisie est au moins l'un parmi une souris, un curseur, un réticule, un écran tactile, et un clavier ; ou

dans lequel le système comprend en outre un capteur (118) connecté pour fournir des coordonnées au processeur (108).

12. Système de surveillance (100) selon la revendication 10, dans lequel la mémoire stocke en outre des instructions exécutables par le processeur (108) pour réaliser des processus qui incluent :

l'application de la rotation mathématique aux coordonnées cartésiennes définies par le premier système de coordonnées tridimensionnelles pour un point sélectionné par l'utilisateur dans la carte (300) pour déterminer des coordonnées cartésiennes définies par le second système de coordonnées tridimensionnelles ;

la conversion des coordonnées cartésiennes définies par le second système de coordonnées tridimensionnelles en coordonnées de pivotement horizontal et d'inclinaison verticale pour le point sélectionné ; et

la fourniture d'instructions d'orientation à l'au moins une caméra d'après les coordonnées de pivotement horizontal et d'inclinaison verticale pour le point sélectionné.

**FIG. 1**

START — 200

Display a video feed from a camera ——202

Display a map of an area ——204

Allow a user to select at least three pairs of points, a first point of the pair being selected in the map and a second point of the pair being selected from the video feed, the first point and the second point should correspond to the same geographic location ——206

Convert the at least three points selected in the map from geospatial coordinates into Cartesian coordinates defined by a first coordinate system ——208

Convert the at least three points selected in the video feed from pan, zoom, and tilt coordinates into Cartesian coordinates defined by a second coordinate system ——210

Determine a mathematical rotaion between the first coordinate system and the second corrdinate system based upon the Cartesian coordinates for the at least three pairs of points ——212

END

*FIG. 2*

**FIG. 3A**

**FIG. 3B**

**FIG. 4A**

**FIG. 4B**

500

| | # | Longitude: (deg) | Latitude: (deg) | Pan Angle: | Tilt Angle: |
|---|---|---|---|---|---|
| ► | 1 | -86.746576 | 34.673824 | 179.5 | -11.0 |
| | 2 | -86.746587 | 34.673894 | 179.5 | -11.0 |
| | 3 | -86.746365 | 34.673897 | 257.8 | -23.3 |
| | 4 | -86.746165 | 34.673897 | 334.2 | -18.3 |
| | 5 | -86.746173 | 34.673817 | 25.4 | -20.3 |
| | 6 | -86.746365 | 34.673821 | 72.3 | -44.5 |

Calibrate Camera - C17CD_BreezeWay   X

Add Points

Edit Video

Edit Map...

Append

Delete

502    504    506    508

Calibrate    Clear    Save    Cancel

**FIG. 5**

600

START

Display a map of an area — 602

Allow the user to select at least one point in the map — 604

Convert the geospatial coordinates for the selected point into Cartesian corrdinates defined by a frist coordinate system — 606

Apply a mathematical rotation to the Cartesian coordinates for the selected point to determine Cartesian coordinates defined by a second coordinate system — 608

Convert the Cartesian coordinates defined by the second coordinate system for the selected point into at least pan and tilt coordinates for the selected point — 610

Provide orientation instructions to a camera based upon at least the pan and tilt coordinates for the selected point — 612

Display a video feed from the camera — 614

END

*FIG. 6*

*FIG. 7*

START

Receive coordinates from at least one sensor for a target — 802

Convert the coordinates for the target into Cartesian coordinates defined by a first coordinate system if the coordinates are not already in Cartesian form — 804

Apply a mathematical rotation to the Cartesian coordinates for the target to determine Cartesian coordinates defined by a second coordinate system — 806

Convert the Cartesian coordinates defined by the second coordinate system for the target into at least pan and tilt coordinates for the target — 808

Provide orientation instructions to a camera based upon at least the pan and tilt coordiantes for the target — 810

Display a video feed from the camera — 812

END

*FIG. 8*

900

```
┌─────────────┐
│    START    │
└─────────────┘
       │
       ▼
┌──────────────────────────────────────────────────┐
│   Receive coordinates for a point of interest     │──── 902
└──────────────────────────────────────────────────┘
       │
       ▼
┌──────────────────────────────────────────────────┐
│ Determine whether the point of interest is within │
│              the viewing of                        │──── 904
│                any cameras                         │
└──────────────────────────────────────────────────┘
       │
       ▼
┌──────────────────────────────────────────────────┐
│ If at least two cameras are within viewing range  │
│ of the point of interest, determine distances     │──── 906
│ between the cameras and the point of interest     │
└──────────────────────────────────────────────────┘
       │
       ▼
┌──────────────────────────────────────────────────┐
│ Determine which of the cameras is the least       │
│ distant from the point of interest                 │──── 908
└──────────────────────────────────────────────────┘
       │
       ▼
┌──────────────────────────────────────────────────┐
│  Display the video feed from the least distant     │──── 910
│                   camera                           │
└──────────────────────────────────────────────────┘
       │
       ▼
┌─────────────┐
│     END     │
└─────────────┘
```

*FIG. 9*

**FIG. 10**

*FIG. 11*

```
                    ┌─────────────────┐              ╱1200
                    │      START      │          ↙
                    └─────────────────┘
                             │
                             ▼
        ┌───────────────────────────────────────────────┐
        │           Display a map of an area            │──1202
        └───────────────────────────────────────────────┘
                             │
                             ▼
        ┌───────────────────────────────────────────────┐
        │ Determine effective pan and tilt angles for at│
        │ least the lower left and lower right corners of│──1204
        │ the video feed based upon the pan, zoom, and   │
        │ tilt coordinates for the camera orientation    │
        └───────────────────────────────────────────────┘
                             │
                             ▼
        ┌───────────────────────────────────────────────┐
        │  Convert the effective pan and tilt angles into│
        │  Cartesian coordinates defined by a second     │──1206
        │  coordinate system                             │
        └───────────────────────────────────────────────┘
                             │
                             ▼
        ┌───────────────────────────────────────────────┐
        │  Apply a mathematical rotation to the Cartesian│
        │  coordinates to determine Cartesian coordinates│──1208
        │  defined by a first coordinate system          │
        └───────────────────────────────────────────────┘
                             │
                             ▼
        ┌───────────────────────────────────────────────┐
        │ Determine a view cone based upon the Cartesian │
        │ coordinates defined by the first coordinate    │──1210
        │ system                                         │
        └───────────────────────────────────────────────┘
                             │
                             ▼
        ┌───────────────────────────────────────────────┐
        │          Display the view cone on the map      │──1212
        └───────────────────────────────────────────────┘
                             │
                             ▼
                    ┌─────────────────┐
                    │       END       │
                    └─────────────────┘
```

*FIG. 12*

**FIG. 13**

**FIG. 14**

1512    FOV    1514    1504    Video Image    1506

UL        UR    UL         UR

1502

$V_{FOV}$    1500

LL    LR     LL    $H_{FOV}$    LR

1516   1518    1508    1520    1510

**FIG. 15**

UL   UR

UL                       LR

UR                  LL

LR          1600

LL

UL        1602

**FIG. 16**

**FIG. 17**

**FIG. 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090237510 A1

### Non-patent literature cited in the description

- **A. OBUKHOV ; K. STRELNIKOV ; D. VATOLIN.** Fully Automatic PTZ Camera Calibration Method. *Graphicon 2008 Proceedings,* 23 June 2008, 122-127
- **BERTHOLD K. P. HORN.** Closed-form Solution of Absolute Orientation Using Unit Quaternions. *Journal of the Optical Society of America,* April 1987, vol. 4, 629
- **WILLIAM H. PRESS et al.** Numerical Recipes in C. Cambridge University Press, 1992
- **PAUL BOURKE.** *Determining If a Point Lies on the Interior of a Polygon,* November 1987, http://local.wasp.uwa.edu.au/~pbourke/geometry/insidepoly
- **IVAN S. ASHCROFT.** Projecting an Arbitrary Latitude and Longitude onto a Tangent Plane. Brigham Young University, 21 January 1999